(19) **Europäisches Patentamt / European Patent Office / Office européen des brevets**

(11) **EP 3 800 758 B1**

(12) # EUROPEAN PATENT SPECIFICATION

(45) Date of publication and mention
of the grant of the patent:
**20.07.2022 Bulletin 2022/29**

(21) Application number: **19200975.1**

(22) Date of filing: **02.10.2019**

(51) International Patent Classification (IPC):
**H02J 3/38** *(2006.01)*      **H02J 7/35** *(2006.01)*
**H02J 9/00** *(2006.01)*

(52) Cooperative Patent Classification (CPC):
**H02J 7/35; H02J 3/381; H02J 9/005;**
H02J 2300/26; Y02B 10/10; Y02B 70/30;
Y02E 10/56; Y04S 20/20

(54) **SYSTEM WITH SLEEP FUNCTION FOR POWERING A POWER CONSUMPTION DEVICE OF BUILDING EQUIPMENT**

SYSTEM MIT SCHLAFFUNKTION ZUR STROMVERSORGUNG EINES STROMVERBRAUCHERS EINER GEBÄUDEAUSRÜSTUNG

SYSTÈME DOTÉ D'UNE FONCTION DE SOMMEIL POUR ALIMENTER UN DISPOSITIF DE CONSOMMATION D'ÉNERGIE D'UN ÉQUIPEMENT DE CONSTRUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.04.2021 Bulletin 2021/14**

(73) Proprietor: **VKR Holding A/S**
**2970 Hørsholm (DK)**

(72) Inventors:
• **SØRENSEN, Alex**
  **2970 Hørsholm (DK)**
• **THOMSEN, Jan**
  **2970 Hørsholm (DK)**

(74) Representative: **Zacco Denmark A/S**
**Arne Jacobsens Allé 15**
**2300 Copenhagen S (DK)**

(56) References cited:
**US-A1- 2006 185 799     US-A1- 2009 284 240**

## Description

The present disclosure relates to a window and/or or architectural covering system comprising a window and/or an architectural covering, and an electric, battery powered drive system for operating a window or architectural covering.

## Background

Building equipment such as windows, for example roof windows, may be installed with various electronic loads/power consumption devices in order to be able to provide various functionalities.

Such electronic loads/power consumption devices may e.g. be electric motors for adjusting the position of the window (of the window is a hinged window), one or more electric screening drivers/motors for operating a screening/covering assembly such as a roller shutter and/or a blind, one or more sensors, a radio transceiver for receiving and transmitting radio signals, a control system for controlling the devices according to a predefined control scenario and/or control input from controllers such as a remote control and/or the like.

Powering of such electronic loads/power consumption devices may be provided directly by the utility grid/mains, but this is often disadvantageous due to higher installation costs, and the possible need of undesired visible electric wires. Hence, another solution is to install a rechargeable power unit in the building equipment, and a photovoltaic power supply may be installed in order to recharge the rechargeable power unit.

The quality of photovoltaic power panels may differ significantly. EP 3 267 212 A1 discloses a solution for selecting a solar panel for the production of a motor operated device for use in a window opening, and a rechargeable battery can be recharged by the solar panel. EP 2 597 245 A1 discloses another solution where solar cell panels are installed at a window to provide electric power.

However, the presently known solutions suffer from drawbacks in relation to e.g. assuring power supply to a rechargeable battery for powering electronic loads/power consumption devices of building equipment such as windows or coverings for windows in a cost efficient manner. The present disclosure e.g. provides a cost efficient and yet power saving solution for this problem.

Here, the documents US 2006/185799 A1 and US 2009/284240 A1 are identified. In particular, US 2006/185799 A1 relates to a shade that can be rolled up and installed by a home owner that comprises a solar cell, a battery, a tubular motor, and a power management controller. The solar cell can recharge a battery. A sleep mode (dormant mode) function for power saving is also disclosed.

## Summary

The present disclosure relates in a first aspect to a window and/or architectural covering system comprising a window and/or architectural covering and a control system for operating the window or architectural covering. The control system comprises at least one power consumption device comprising at least an electrically driven drive unit for controlling the setting of said window or architectural covering, and a power supply system configured to power the at least one power consumption device. The power supply system comprises:

- a rechargeable battery configured to store electric power and supply electric power to said at least one power consumption device,
- at least one photovoltaic power supply panel arranged to charge the rechargeable battery unit,
- a Pulse Width Modulated (PWM) boost converter for stepping up the output voltage from the at least one photovoltaic power supply panel, and
- a charging control system configured to control the charging of the rechargeable battery.

The charging control system comprises a Maximum Power Point Tracking (MPPT) feature which when executed is configured to retrieve one or more output parameters from the at least one photovoltaic power supply panel and adapt the pulse width modulation of the boost converter based thereon. Additionally, the charging control system comprises a sleep mode function for power saving.

The charging control system is configured to be activated from the sleep mode to execute the Maximum Power Point Tracking feature. Said activation from the sleep mode may in aspects of the present disclosure be configured to be provided with an activation frequency less than 500 Hz, such as less than 50 Hz, such as less than 10 Hz.

In order to achieve a more efficient power supply and increased utilization of a photovoltaic power supply panel, a "Maximum Power Point Tracking" (MPPT) feature may be efficient to implement, as it help to optimize power extraction from the photovoltaic power supply panel under varying sunlight and/or temperature conditions. Accordingly, when the Maximum Power Point Tracking (MPPT) feature is executed, it adapts the pulse width modulation of the boost converter based on one or more retrieved, such as measured, output parameters from the at least one photovoltaic power supply panel. This adaption may comprise that the MPPT system/feature provides the adaption of the PWM by providing an adjustment of the period time and/or duty cycle of a switch arrangement of the boost converter based on the measured values, and thereby adapts the load on the photovoltaic panel(s) to the Maximum Power Point (MPP) of the panel(s). This hence helps to adapt the load impedance applied to the at least one photovoltaic power supply panel based on the one or more output parameters from the at least one photovoltaic power supply panel, and hence provides optimization of the utilization of the photovoltaic power supply panel.

The charging control system may be configured so that the charging controller determines a duty cycle and/or a period time for the duty cycle for the pulse width modulation to be applied to the boost converter while the charging control system has entered/is in the sleep mode, and this pulse width modulation is provided by the charging control system, such as by a microcontroller, while the charging control system is in the sleep mode.

The present inventors have realized, that a MPPT feature for use in recharging batteries of such window and/or architectural covering systems may not need to "sample" the photovoltaic power supply panel output that often, nor may it need to provide MPPT regulation that often. The present inventors have hence seen that an activation from sleep mode with an activation frequency less than 500 Hz, such as less than 50 Hz, such as less than 10 Hz may provide a sufficient MPPT feature for window and/or architectural covering systems, and hence also provide a system with increased power efficiency.

It is however understood that in one or more further aspects of the present disclosure, the activation frequency of the MPPT feature may be above/larger than 500 Hz.

The system according to the present disclosure may e.g. also provide an improved and more cost efficient solution for control systems for windows such as roof windows and/or for coverings such as roller shutters or blinds, which is also a power saving solution, where smaller photovoltaic panels comprising fewer cells per panel may be utilized for charging the battery.

In one or more aspects of the present disclosure, the charging control system may be configured to be powered by the at least one photovoltaic power supply panel.

This may e.g. provide a more charging efficient and/or cost efficient power supply system.

The present inventors have by tests realized that conventional charging controllers including an MPPT feature, such as including a "Perturb and observe" feature, may not work sufficiently in lower power systems where lower power photovoltaic panels are arranged to recharge batteries of systems for controlling a window and/or an architectural covering. This may in particular apply if the feature is implemented to be powered alone by the photovoltaic power supply panel. The inventors have seen indications that the reason for this may be that the conventional step-up power converters (a boost converter) with the MPPT feature in fact requires rather high power to start up from a sleep mode/hibernation state, as the photovoltaic power supply panel may not supply sufficient power. This may apply in situations at the installation site where the energy in the sunlight/ sun irradiation is reduced.

By for example reducing the sample/activation frequency of the MPPT feature to less than 500 Hz, such as less than 50 Hz, such as less than 10 Hz, for example around 4 Hz, this may help to reduce the power consumption of the MPPT feature and hence the power consumption of charging controller to a value that enables that a charging controller including an MPPT feature, and which can be powered by the photovoltaic power supply panel or panels alone, is able to "wake up"/be activated after hibernation /sleep mode, also at lower output power values of the photovoltaic power supply panel. This may hence be advantageous if the charging control system is configured to be powered by the at least one photovoltaic power supply panel.

By the term "the charging control system is configured to be powered by the at least one photovoltaic power supply panel" is understood that the charging control system is hence not powered by the rechargeable battery. Instead, when the photovoltaic power supply panel produces almost no power (such as during the night at the installation site), the charging controller may also power down and will automatically re-initialize when sufficient power is present again.

It is however to be understood that in other aspects of the present disclosure, the charging controller may be powered by the rechargeable battery.

In one or more aspects of the present disclosure, the one or more output parameters of the at least one photovoltaic power supply panel may comprise:

- a measured output voltage of the at least one photovoltaic power supply panel, and/or
- a measured output current of the at least one photovoltaic power supply panel.

When the solar irradiation and/or the ambient temperature changes, the position of the Maximum power point of the photovoltaic power supply panel(s) changes. The MPPT feature adapts the load on the photovoltaic power supply panel based on the output voltage and current from the photovoltaic power supply panel when it is activated from the sleep mode. Hence the photovoltaic power supply panel is continuously operated around the Maximum Power Point when the solar irradiation and/or the ambient temperature changes over time.

In one or more aspects of the present disclosure, the Maximum Power Point Tracking feature may be configured to compare at least one parameter to a previously stored value, and based thereon provide said adaption of the pulse width modulation of the boost converter, to be applied to a switch of the boost converter after the charging control system has re-entered the sleep mode. In one or more further aspects of the present disclosure, said at least one parameter may be a power value calculated based on said one or more output parameters, such as measured voltage and current supplied by the photovoltaic panel(s), and the previously stored value may be a prior stored power value.

This may e.g. help to provide that the Maximum Power Point Tracking (MPPT) system comprises a low power perturb and observe feature. The PWM signal for controlling the Boost converter's switch is hence adjusted based on the parameter (such as power) comparison over time, so as to adjust the load applied to the photovoltaic module to fit the present Maximum Power Point of the photovoltaic module.

Hence, while the charging controller is active, the MPPT feature is executed and the PWM duty cycle on time and/or period time is adjusted according to the present "sampled" parameters, such as voltage and current values (and possibly a calculated power based thereon), of the photovoltaic panel or panels.

When the controller hence subsequently re-enters sleep mode again, the new, adapted PWM of the switch of the boost converter is applied to the switch of the boost converter during the sleep mode by the charging controller so as to charge the rechargeable battery.

It is understood that the adjustment of the pulse width modulation of the boost converter's switch may be provided by adjusting (such as increasing or decreasing) a duty cycle on time and/or a period time for the duty cycle of the PWM signal.

In one or more aspects of the present disclosure, said rechargeable battery unit may have a rated power (when substantially fully charged) which is between 5Wh and 50Wh, such as between 10 Wh and 35 Wh, such as between 14 Wh and 26 Wh.

Such rechargeable batteries are space saving, cost efficient and may be sufficient to provide sufficient power to the system over the estimated life time (such as more than 15 years, e.g. about 20 years) of the window or covering and/or the control system.

In one or more aspects of the present disclosure, the ratio $(\frac{Texe}{Tsleep})$ between the time span where the charging control system (3) is configured to be active and in sleep mode respectively, is between 0.001 and 0.1 such as between 0.005 and 0.1, such as between 0.009 and 0.03.

This e.g. provides a power saving power supply system that at the same time provides an efficient optimization of the power output from the photovoltaic/solar panel. In preferred aspects, the ratio may in particular be between be between 0.005 and 0.03.

The present inventors have seen indications that a sufficient MPPT feature for windows and coverings may be provided by a charging controller system including a micro controller, such as a micro controller having a 5-45 MHz, such as a 10 to 30 MHz, e.g. an around 20Mhz CPU (values given as max. clock frequency of the CPU) may be in sleep mode more than 80%, such as more than 90%, such as more than 95% of the time, or even up to more than 98% of the time, and hence provide a power saving solution.

In one or more aspects of the present disclosure, a predefined timer interrupt may configured to provide said activation of the charging control system so as to execute the Maximum Power Point Tracking feature.

The Timer interrupt may hence be timer controlled in order to activate the charging controller from sleep mode in order to execute instructions/program code of the MPPT feature.

In one or more aspects of the present disclosure, the charging control system (3) is configured to be activated from the sleep mode to execute the Maximum Power Point Tracking feature with an activation frequency between 0.03 Hz and 500 Hz, such as between 0.3 Hz and 50 Hz, such as between 1 Hz and 10 Hz.

This may provide a power saving solution wherein an adaption to the Maximum Power Point MPP of the photovoltaic panel is still provided. For example, in aspects of the present disclosure, the activation frequency may be between 3 Hz and 6 Hz, such as around 4 Hz. In particular, the activation frequency may be between 0.3 Hz and 50 Hz such as between 1 Hz and 10 Hz as the present inventors have seen that this may be sufficient to provide a sufficient MPPT feature where the charging controller can still be activated from sleep mode while powered by the photovoltaic panel such as a single panel.

In one or more aspects of the present disclosure, the at least one photovoltaic power supply panel may have a maximum rated output voltage that is below 10V DC, such as below 8V DC, for example below 6V DC, such as around 4.2V DC.

Using higher voltage photovoltaic panels may help to increase the assurance of sufficient charging of the rechargeable battery and the output may be adjusted by voltage reduction in order to fit a desired battery charging voltage. These higher voltage photovoltaic panels are however rather cost expensive, and such solar/photovoltaic panels and the rechargeable battery may constitute a considerable part of the price of the electronics system for controlling the building equipment such as a window, or a covering.

The present inventors have realized that photovoltaic power supply panel having a lower rated maximum output voltage in the mentioned range may be more cost efficient and additionally in fact be able to provide a sufficient charging over time of a battery of a system for operating a window or architectural covering when combined with a boost converter.

In one or more aspects of the present disclosure, the at least one photovoltaic power supply panel may have a rated maximum output voltage that is at least 1.2V such as at least 1.8V, e.g. at least 2.4V.

In one or more aspects of the present disclosure, the at least one photovoltaic power supply panel comprises between 3 and 15 solar cells, such as between 4 and 10 solar cells (both end points included).

In one or more aspects of the present disclosure, the at least one photovoltaic power supply panel may have a maximum output voltage that is at least 1.3 times lower, such as at least 2 times lower, for example at least 2.5 times lower than the maximum output voltage of the rechargeable battery.

In one or more aspects of the present disclosure, the at least one photovoltaic power supply panel may be a crystalline, such as mono crystalline, silicon photovoltaic power supply panel,

In one or more aspects of the present disclosure, said charging controller system, before re-entering said sleep mode, may moreover configured to compare an output voltage of the boost converter with an over voltage threshold, and adjust the pulse with modulation of a switch of the boost converter, if the output voltage of the boost converter exceeds the over voltage threshold,

such as wherein said adjustment, if the output voltage of the boost converter exceeds the over voltage threshold, comprises reducing the duty cycle on time and/or increasing or reducing the period time of the duty cycle, or by turning off the pulse width modulation.

The present inventors have seen that when providing the power supply system with a boost converter, the boost converter may unintentionally continue to increase the voltage in case e.g. the battery is removed or the connection to the battery is lost in one or the other way. This may damage components of the power supply system. However, the above solution provides that in case the charging controller system finds that the output voltage of the boost converter exceed the threshold, the pulse with modulation is automatically regulated to reduce the voltage output from the boost converter, or by turning off/stop the pulse width modulation. This may in further aspects continue/be maintained at each activation from sleep mode until a new battery is applied or the battery connection is restored, and hence the system automatically restarts the re-charging. This may help to reduce the risk of damaging the power supply system. This e.g. helps to provide a power saving safety measure.

In one or more aspects of the present disclosure, said charging controller, before re-entering said sleep mode, may moreover configured to provide an over current protection by comparing a charging current value to an over current threshold, and adjust the pulse width modulation, such as by reducing the duty cycle on time and/or increasing or reducing the period time of the duty cycle, based thereon.

In some hotter/ very sun rich climates, it may happen that the battery to be recharged may be overloaded over time, and this may reduce the life time of the battery significantly. However, providing that the charging controller, when activated from sleep mode, also provides an over current evaluation and is able to control the boost converter to avoid over charging provides a power saving solution and helps to ensure that the system may be used and be longer lasting in various climates.

In one or more aspects of the present disclosure, the electrically driven drive unit, the rechargeable storage unit/battery and the charging control system may be placed in the same device, such as inside a common housing, which is attached to or a part of the window or architectural covering system.

It is understood that the window or architectural covering system in aspects of the present disclosure is a window system such as a roof window system, and wherein said electrically driven drive unit is an electric motor configured to move a hinged window sash of the window.

It is understood that the window or architectural covering system in other aspects of the present disclosure is a covering system, such as a roller shutter and/or a blind, such as a roller blind or venetian blind, configured to cover a window pane of a window, and wherein the electrically driven drive unit, such as an electric motor, is configured to operate the architectural covering.

The common housing may in aspects of the present disclosure comprise a housing integrated in the interior of the window or covering, or it may alternatively be an external housing configured to be attached to the window (or covering) by means of mechanical fattening arrangements such as screws, a clips system, by means of protrusions extending into pre-provided recesses and/or the like.

In one or more aspects of the present disclosure, the window or architectural covering system further comprises a drive controller, such as a drive controller arranged inside said housing, wherein the drive controller is configured to control the electrically driven drive unit. For example, in aspects of the present disclosure, the drive controller may be configured to automatically initiate an operation of the electrically driven drive unit according to a predefined set of rules based on input information such as one or more of

- temperature sensor information,
- light sensor information,
- time information,
- force sensor information determined based on one or more force sensors such as one or more strain gauges
- rain sensor information and/or
- battery status information.

Automation control based on one or more of the above information may e.g. help to provide an enhanced indoor climate, help to provide power saving due to a desired automatic temperature and/or light regulation, help to provide a more safe system and/or the like.

In one or more aspects of the present disclosure, the charging controller system may, in addition to executing said Maximum Power Point Tracking (MPPT) feature, moreover be configured to execute one or more further safety measure evaluations, and wherein the charging control system is configured to control the PWM signal of the boost converter, such as by reducing or turning off the PWM signal controlling the switch of the boost converter, if one or more thresholds is/are exceeded. In further embodiments of the present disclosure, the one or more further safety measure evaluations may comprise one or more of an over current protection test, an over voltage protection test and/or a temperature test.

This may e.g. provide a cost efficient and yet power saving power supply system which provides a system that may be more resistant.

The temperature test may provide that the battery may be longer lasting, also in hotter and/or colder climates.

In one or more aspects of the present disclosure, said at least one photovoltaic panel may be configured to be connected to the power supply system by means of a panel connector such as a plug or socket. For example, in further aspects of the present disclosure, said panel connector may be accessible at the exterior of a housing, such as a housing end, where the housing encloses at least said drive unit, rechargeable battery, charging control system and boost converter.

The present disclosure additionally, in a second aspect, relates to an electric, battery powered control system for operating a window or architectural covering. The control system according to the second aspect comprises at least one power consumption device comprising at least an electrically driven drive unit, such as an electric tubular motor drive or a chain actuator drive, for adjusting the window or architectural covering when connected thereto. Additionally, the control system comprises a power supply system configured to power the power consumption devices, wherein the power supply system comprises:

- a rechargeable battery configured to store electric power and supply electric power to said at least one power consumption device,
- at least one photovoltaic power supply panel for recharging the rechargeable battery unit,
- a Pulse Width Modulated (PWM) boost converter for stepping up the output voltage of the at least one photovoltaic power supply panel, and
- a charging control system configured to control the re-charging of the rechargeable battery.

The charging control system comprises:

- a Maximum Power Point Tracking feature which when executed is configured to adapt the pulse width modulation of the boost converter based on one or more retrieved, such as measured, output parameters from the at least one photovoltaic power supply panel, and
- a sleep mode function for power saving.

The charging control system is configured to be activated from the sleep mode with an activation frequency (f_act) so as to execute the Maximum Power Point Tracking (MPPT) feature. Said activation from the sleep mode may be provided with an activation frequency (f act) less than 500 Hz, such as less than 50 Hz, such as less than 10 Hz.

This e.g. provides one or more advantages as e.g. described previously.

In one or more aspects of the second aspect, the charging control system (3) may be configured to be powered by the at least one photovoltaic power supply panel (13a).

In one or more aspects of the second aspect, it is understood that the electrically driven drive unit, the rechargeable battery and the charging control system of the electric, battery powered control system may be placed in the same device, such as inside a common housing, which is configured to be attached to or a part of the window or architectural covering system.

In one or more aspects of the second aspect, said control system may be configured to provide a window or architectural covering system according to any of claims 1-15 when installed at a window or architectural covering.

The present disclosure moreover, in a third aspect relates to a window and/or architectural covering system comprising a window and/or architectural covering and a control system for operating the window or architectural covering. Here, the the control system comprises at least one power consumption device comprising at least an electrically driven drive unit for controlling the setting of said window or architectural covering, and a power supply system configured to power the at least one power consumption device.

The power supply system comprises:

- a rechargeable battery configured to store electric power and supply electric power to said at least one power consumption device,
- at least one photovoltaic power supply panel arranged to recharge the rechargeable battery unit,
- a Pulse Width Modulated (PWM) boost converter for stepping up the output voltage of the at least one photovoltaic power supply panel, and
- a charging control system configured to control the re-charging of the rechargeable battery.

The charging control system comprises:

- a Maximum Power Point Tracking (MPPT) feature which when executed is configured to sample/retrieve one or more output parameters derived from the at least one photovoltaic power supply panel and adapt the pulse width modulation of the boost converter based thereon, and
- a sleep mode function for power saving.

The charging control system is configured to be activated (Tact) from the sleep mode to execute the Maximum Power Point Tracking (MPPT) feature. The activation from the sleep mode is configured to be provided with an activation frequency (f act), such as a predefined activation frequency (f act). The activation may e.g. in aspects of the third aspect be provided by a timer interrupt function of the charging controller.

The system according to the third aspect e.g. provides an improved and more cost efficient solution for control systems for windows such as roof windows and/or for coverings such as roller shutters or blinds, which is also a power saving solution, where smaller photovoltaic panels comprising fewer cells per panel may be utilized for charging the battery.

The charging control system may in aspects of the third aspect be configured to be powered by the at least one photovoltaic power supply panel. In further aspects of the third aspect, the charging control system may be configured to be powered by the rechargeable battery.

In one or more aspects of the third aspect, said control system may be configured to provide a window or architectural covering system according to any of claims 1-16 when installed at a window or architectural covering.

Additionally, the present disclosure relates an electric, battery powered control system for operating a window or architectural covering according to a fourth aspect. The control system according to the fourth aspect comprises at least one power consumption device comprising at least an electrically driven drive unit, such as an electric tubular motor drive or a chain actuator drive, for adjusting the window or architectural covering when connected thereto, and

a power supply system configured to power the power consumption devices. The power supply system comprises:

- a rechargeable battery configured to store electric power and supply electric power to said at least one power consumption device,
- at least one photovoltaic power supply panel for charging the rechargeable battery unit,
- a Pulse Width Modulated (PWM) boost converter for stepping up the output voltage from the at least one photovoltaic power supply panel, and
- a charging control system configured to control the re-charging of the rechargeable battery.

The charging control system comprises:

- a Maximum Power Point Tracking (MPPT) feature which when executed is configured to retrieve one or more output parameters derived from the at least one photovoltaic power supply panel, and adapt the pulse width modulation of the boost converter based thereon, and
- a sleep mode function for power saving,

The charging control system is configured to be activated (Tact) from the sleep mode to execute the Maximum Power Point Tracking (MPPT) feature, wherein said activation from the sleep mode is configured to be provided with an activation frequency, such as a predefined activation frequency.

The charging control system may in aspects of the fourth aspect be configured to be powered by the at least one photovoltaic power supply panel. In further aspects of the fourth aspect, the charging control system may be configured to be powered by the rechargeable battery.

In one or more aspects of the fourth aspect, said control system may be configured to provide a window or architectural covering system according to any of claims 1-16 when installed at a window or architectural covering.

It is generally to be understood that one or more of the aspects described above, such as the aspects described above before the second aspect, may in aspects of the present disclosure be combined with any of the first, second, third and/or fourth aspect described above.

**Figures**

Aspects of the present disclosure will be described in the following with reference to the figures in which:

Fig. 1 : illustrates a control system 50 for operating a window or architectural covering according to embodiments of the present disclosure,

Fig. 2 : illustrates a roof window system according to embodiments of the present disclosure,

Fig. 3 : illustrates a plug/socket solution according to embodiments of the present disclosure,

Fig. 4 : illustrates a system according to embodiments of the present disclosure arranged inside a tubular enclosure

Fig. 5 : illustrates a system according to embodiments of the present disclosure for operating window,

Fig. 6 : illustrates a boost converter controlled by means of a charging controller according to embodiments of the present disclosure,

Fig. 7 : Illustrates a flow chart according to embodiments of the present disclosure, and

Fig. 8 : illustrates a Maximum Power Point MPP changing over time,

Fig. 9 : illustrates the activity of a charging controller according to embodiments of the present disclosure,

Fig. 10 : illustrates a flow chart according to further embodiments of the present disclosure

Fig. 11 : illustrates adjustment of a duty cycle of a switch of a boost converter according to embodiments of the present disclosure, and

Fig. 12 : illustrates a PWM signal where a maximum power point tracking (MPPT) feature provides an adjustment of a switch of a boost converter according to embodiments of the present disclosure.

## Detailed description

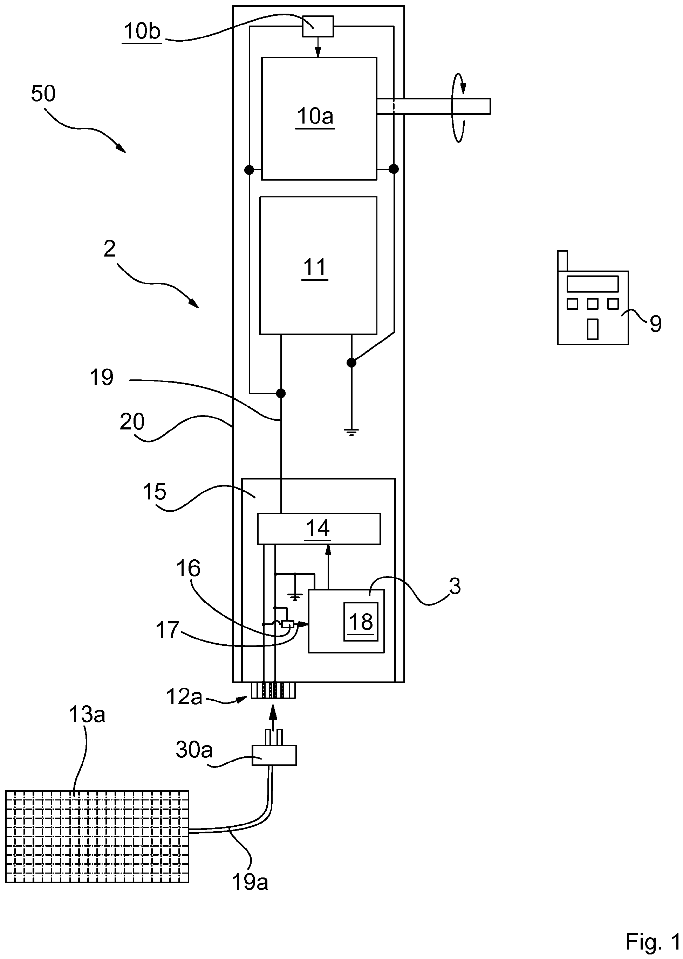

Fig. 1 illustrates schematically an electric, battery powered drive/control system 50 for operating a window or architectural covering (not illustrated in fig. 1) according to embodiments of the present disclosure.

The system 50 comprises power consumption devices. In fig. 1, this comprises an electrically driven drive unit 10a for adjusting the setting of a window or architectural covering, and a drive controller 10b configured to control the electrically driven drive unit 10a based on one or more input signals and a control program code stored in a data storage (not illustrated) of the system 50.

The drive unit 10a may in embodiments of the present disclosure e.g. be an electrically driven push/pull chain actuator system, a spindle system, a tubular motor or the like configured to adjust a window sash, an architectural covering such as a roller shutter, a blind (e.g. roller blind or venetian blind) and/or the like.

In embodiments of the present disclosure the electrically driven drive unit 10a is provided in a wing such as a window. The drive unit 10a may be provided between a fixed frame and a hinged wing such that the wing can open and close related to the fixed frame. For example the drive unit 10a may be provided as a spindle actuator or a chain actuator.

In embodiments of the present disclosure the electrically driven drive unit 10a is provided in an architectural covering to deploy and retract the covering. For example, the drive unit 10a can be provided inside a winding tube of the covering. For example the drive unit 10a may be provided as a tubular motor.

The drive unit 10a may in embodiments of the present disclosure comprise an electric motor and a gear unit (not illustrated).

The drive controller 10b may be a micro controller or other suitable control circuitry configured to control the drive 10a based on input from sensors such as rain sensors, temperature sensors, timers (such as "time on day" information) and/or the like (not illustrated in fig. 1) by means of an automation control program code executed by the drive controller 10b.

Additionally a user may in embodiments of the present disclosure provide control by means of a remote control 9 such as a remote control with a user interface (buttons and/or touch screen) specifically designed for the system (as illustrated) and possibly also comprising a display for presenting information to the human user.

The remote control 9 may also in further embodiments of the present disclosure be a tablet, smartphone or the like comprising an downloaded and installed software program providing a user interface (also known as an "app"). The user interface may be accessible by means of a touch screen (not illustrated in fig. 1) on the remote control 9, and the user may provide user interaction by means of voice recognition system, touching the touch screen and/or the like so as to transmit control signals to the system 50. Also, the user may receive status messages communicated to the user by means of screen and/or sound based on transmitted radio signals from the system 50.

The controller 10b is configured to control the electrically driven drive unit 10a and may be configured to automatically initiate an operation of the electrically driven drive unit 10a according to a predefined set of rules. These rules are stored as program code in a data storage (not illustrated in fig. 1). The program code, when executed, is configured to control the drive 10a based on input information such as one or more of:

- temperature sensor information,
- light sensor information,
- time information,
- force sensor information determined based on one or more force sensors such as one or more strain gauges
- rain sensor information and/or
- battery status information.

For example, according to embodiments of the present disclosure, when/if the battery charging gets below a predefined threshold, the controller 10 may automatically, execute an instruction to e.g. close a window, move a covering to a predefined position and/or the like. As another example according to embodiments of the present disclosure, a user may select that a covering such as a blind or shutter is automatically moved to a covering position in a predefined time span, such as at night, and automatically be moved by the drive 10a to an uncovering position at a predefined time in the morning. As a still further example according to embodiments of the present disclosure, the rain sensor may provide input so that the drive controller 10b controls the drive to automatically close a window when it rains. As an even further example according to embodiments of the present disclosure, the temperature sensor may trigger an automatic opening of closing of a window, or a movement between a covering or uncovering position of a covering such as a blind or shutter, dependent on the temperature measured by a temperature sensor and a predefined temperature threshold determined by e.g. a user, and/or the like.

The above may hence provide an automatic control of the window or architectural covering based on various parameters over time, which may at least to a certain extent be selected by a user and/or predefined in the mentioned program code.

The system 50 moreover comprises a power supply system 2 configured to power the power consumption devices 10a-10d with electric power.

The power supply system 2 comprises a rechargeable battery unit 11 in the form of a battery such as a Lithium ion (Li-ion) battery, a Nickel Cadmium (NiCd), a Nickel-Metal Hydride (NiMH) Battery or the like. The battery 11 may in embodiments of the present disclosure have a rated (maximum) power when substantially fully which is between 5Wh and 50Wh, such as between 10 Wh and 35 Wh, such as between 14 Wh and 26 Wh.

The rechargeable storage/battery unit 11 is configured to store electric power and supply electric power to the power consumption devices 10a-10b when needed. For example, in response to an activation signal such as an "on", "off", "wind"/"rewind" signal or the like, the battery supplies the needed electric power for the driver 10a in order to enable the driver to move the window or architectural covering to the desired position/state.

The power supply system 2 additionally comprises a power supply connector 12a. This is configured to transfer electric power from a photovoltaic/solar power supply panel 13a when it is connected to the power supply connector so as to recharge the rechargeable battery unit 11.

The photovoltaic panel connector 12a in fig. 1 is either sockets as illustrated in fig.1, such as spring loaded socket, or a plug, and is each configured to receive a plug (as illustrated in fig. 1) or it may alternatively be a socket 30a, 30b of the photovoltaic panel device 13a.

Accordingly, the solar power panel, such as crystalline, e.g. mono crystalline, silicon photovoltaic power supply panels harvests/retrieves energy from sunlight and charges the battery 11 thereby.

It is generally understood that initially, the system 50 may be provided/sold with the first photovoltaic power supply panel 13a.

The photovoltaic power supply panel 13a is, when connected to the first power supply connector 12a configured to recharge the rechargeable battery unit. 11 when sufficient solar power is available.

In the present example of fig. 1, a hardwired electric circuitry connects the panel 13a and the battery 11. This hard wiring may e.g. be provided on a printed circuit board (PCB) 15, on which the power supply connector 12a may also be arranged in further embodiments of the present disclosure.

In embodiments of the present disclosure, the photovoltaic power supply panel 13a has a rated maximum output voltage at substantially full sunlight (i.e. at least 90% of the maximum charging capacity of the panel) that is below 10V DC, such as below 8V DC, for example below 6V DC, such as around 4.2V DC.

For example, in embodiments of the present disclosure, the first and/or second photovoltaic power supply panel (13a) may have a rated maximum output voltage that is at least 1.3 times lower, such as at least 2 times lower, for example at least 2.5 times lower than the rated output voltage of the rechargeable battery.

In embodiments, the photovoltaic power supply panel 13a comprises between 3 and 15 solar cells, such as between 5 and 9 solar cells. These cells may be coupled in series in the panel. Each cell may provide 0.6V. Hence for example a 7 cell panel may thereby providing a 4.2 V ($0.6 \times 7$) maximum rated output voltage.

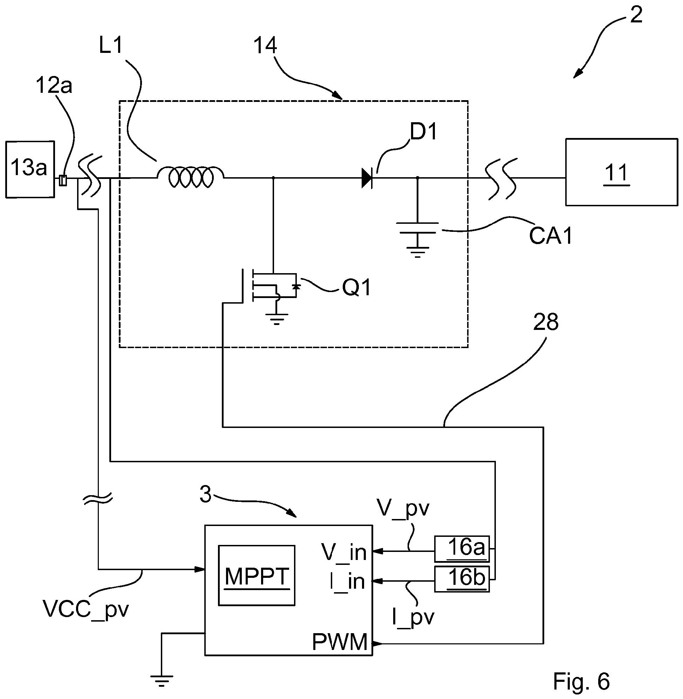

The power supply system 2 comprises as illustrated in the example of fig. 1 a boost converter 14 configured to step up/increase the output voltage of the photovoltaic power supply panel 13a connected to the power supply connector 12a. Embodiments of the boost converter 14 is described in more details later on in relation to e.g. fig. 6.

In order to control the recharging of the battery, the power supply system 2 moreover, in one or more embodiments of the present disclosure, comprises a charging controller 3 of a charging control system configured to control the re-charging of the rechargeable battery unit 11 by controlling a switching device, such as a transistor arrangement, of the boost converter 14, and thereby control the duty cycle pf the PWM signal for a PWM modulated switch of the boost converter, e.g. by adjusting duty cycle and/or period time of the boost converter 14.

As illustrated in fig. 1, the charging control system 3 may in embodiments of the present disclosure comprise a Maximum Power Point Tracking (MPPT) control system, such as including a "Perturb and Observe" feature.

The Maximum Power Point Tracking (MPPT) system is configured to adapt the load applied to the panel 13a, such as by adapting the duty cycle, e.g. by adjusting period time and/or duty cycle value ("on time") of the PWM for a switching arrangement of the Boost converter 14. This is based on based on one or more measured output parameters of the photovoltaic power supply panel. These parameters may comprise a measured output voltage of the at least one photovoltaic power supply panel 13a, 13b and/or a measured output current of the at least one photovoltaic power supply panel 13a, 13b. This is provided by measurement circuitry 16 configured to provide measured voltage and current information 17 to the charging controller 3. As can be seen, the charging controller 3, measuring circuitry 16 and boost converter 14 may be placed at the same PCB 15 in embodiments of the present disclosure.

The charging controller 3 is in embodiments of the present disclosure powered (not illustrated in fig. 1) alone by the at least one panel 13a, and not by the battery 11, and is configured to enter a sleep mode, such as an idling sleep mode provided by the charging control system when not in operation in order to save power.

The charging controller 3 is waken up automatically according to a predefine activation trigger parameter, such as with a predefined time interval, in order to execute the MPPT instructions/functionality based on new measured input information 17, and adjust the duty cycle of the switching arrangement of the boost converter 15 according based on the MPPT result, before re-entering the idling sleep mode again.

The sleep mode of the charging controller may be a feature provided in a micro controller 3 of the charging control system. However, the sleep mode may not stop a main clock of the charging controller 3, as this may be used for controlling the switching arrangement of the boost converter, and thereby provide the PWM signal of the boost converter 14. This clock may hence be controlled by the Maximum Power Point Tracking (MPPT) system 18 to obtain the desired duty cycle and hence the desired pule width modulation (PWM) of the boost converter 14. This may be provide in order to obtain a load on the at least one panel 13a that provides that the panel is loaded at or close to the Maximum Power Point (MPP) in the given situation at the installation site, while the charging controller 3 is in sleep mode.

A charging connection 19, such as a hardwired charging connection (such as on a PCB 15 and/or by means of one or more wires) connects the output of the boost converter 14 to the battery 11, and provides the power supply for charging the rechargeable battery 11.

As can be seen, the drive unit 10a, the battery 11 and the charging control circuitry of the power supply system 2 may in embodiments of the present disclosure be arranged inside a cavity of a common control system enclosure 20 such as a plastic housing, a metal housing or a housing made from another material such as e.g. a composite material such as glass or carbon fibre or a fibre reinforced plastic material. The at least one panel 13a is though arranged outside this enclosure 20.

The power supply system 2 of fig. 1 is configured to recharge the battery 11 inside the housing.

The drive controller 10b may be a microcontroller that is separate to the charging controller 3 which may also be a microcontroller. Hence the charging controller 3 may operate independently of the drive controller 10b and vice versa.

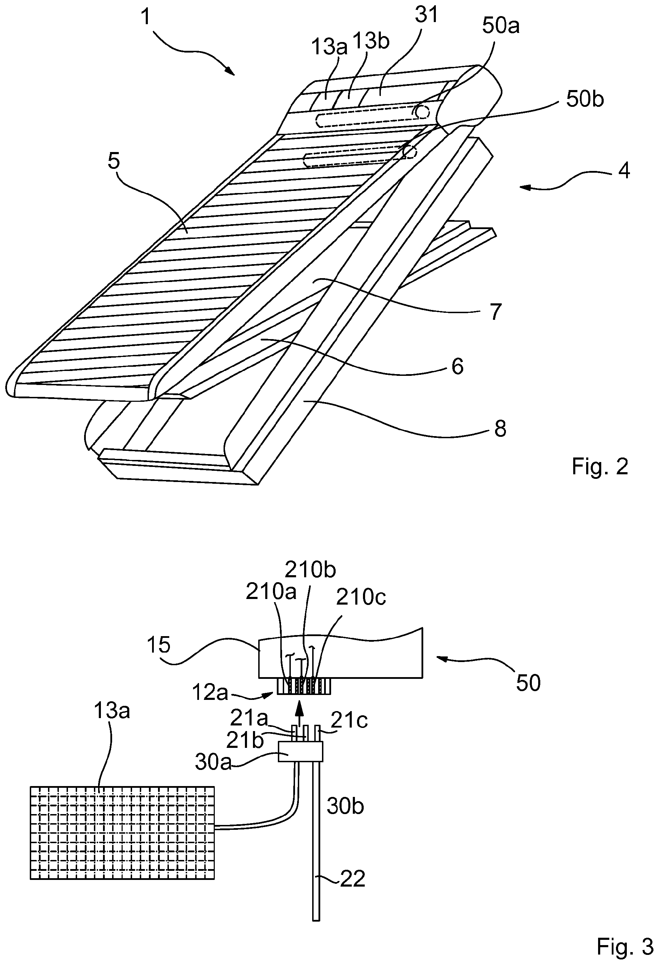

Fig. 2 illustrates schematically a roof window 4 according to embodiments of the present disclosure, seen in perspective.

The roof window 4 comprises an adjustable sash 6 with an insulated glass pane 7 arranged therein. The sash 6 in the example of fig. 2 is a "center pivot" sash, but it may also in other embodiments of the present disclosure be a top-hinged sash. The sash 6 is configured to be moved at a hinged connection, relative to a fixed frame part 8 attached/fixed to a building construction such as a roof construction or the like.

In further embodiments of the present disclosure (not illustrated), the window 4 may be a vertical window configured to be arranged in an outer vertical wall of the building below the roof of the building.

As can be seen, the system in fig. 2 also comprises an architectural covering 5, in this example a roller shutter, but it may also be a blind such as a venetian blind, a roller blind or the like in further embodiments.

The Example of fig. 2 comprises both a window system 4, i.e. the roof window, and an architectural covering system 5, i.e. the roller shutter 5. Each of these comprises a system 50a, 50b respectively for operating the respective window 4 or covering 5.

In the present example, a system 50a for operating the window is integrated in the window system 4. A photovoltaic power supply panel 13a is releasable mounted at a common mounting track 31 of the covering, arranged at the top part of the covering 5. Electric wire 19a (not illustrated in fig. 2, see fig. 1) connects the first panel 13a to connector 12a (see fig. 1).

If the covering 5 is absent, the window 4 may itself comprise a mounting track 31 (not illustrated) and in case a covering such as a roller shutter is later added, the photovoltaic panel 13a13b may be moved to the track 9 of the covering 5 instead.

In the present example, a system 50b for operating the roller shutter 5 is integrated in the covering system 5. A photovoltaic power supply panel 13b is mounted at the same common mounting track 31 of the covering 5 as the panel 13a of the window's system 50a, arranged at the top part of the covering 5. An electric wire 19a (not illustrated in fig. 2, see fig. 1) connects the photovoltaic panel 13b to a photovoltaic panel connector 12a (see fig. 1) of the system 50b for controlling the roller shutter.

The systems 50a, 50b are independent and may be configured to operate according to different sets of rules and comprises each their at least one photovoltaic panel device 13a, 13b, each their drive 10a and each their rechargeable battery 11 as well as each their charging controller 3 (see e.g. fig. 1).

It is understood that in further embodiments of the present disclosure, only a window 4 may be present having its own system 50b for operating the window, and the architectural cover 5 and its control system 50a may hence be omitted.

The track 9 may comprise one or two (as illustrated) power supply panels 13a, 13b for holding the panel(s) for powering the system 50b that is arranged to control the sash 6 of window 4, but more panels 13a, 13b may be present in further embodiments of the present disclosure.

In embodiments of the present disclosure (not illustrated), a plurality of windows 4 without coverings, or windows 4 arranged together with a covering 5, may be arranged in a building, such as in the roof construction of the building (not illustrated). Individual, self-sufficient electric, battery powered control system 50 according to embodiments and/or aspects of the present disclosure may be arranged to control the window 4 and/or covering 5, and each of the systems 50 comprises a housing 20 comprising/enclosing its own power supply system 2, battery 11, charging controller 3, and drive unit 10a. One or more photovoltaic panel(s) 13a is hence connected to the respective power supply system 2, this connection may in embodiments be provided by e.g. a plug-and-socket connection and an electric wire 19a.

Fig. 3 illustrates schematically an embodiment of the present disclosure where the first power supply connector in the form of a plug or socket 12a comprises three galvanic separated connection parts.

Two of the three connection parts are configured to be galvanic connected to power supplying connection parts 21a, 21b of a plug 30a of the first photovoltaic power supply panel 13a so as to recharge the rechargeable battery 11 (not illustrated in fig. 3).

A third connection part of the power supply connector 12a is configured to provide a galvanic connection to an antenna arrangement 22 via an antenna connection part 21c of a plug or socket of the plug 30a. The antenna arrangement 22 may be an electric wire or another suitable type of antenna having a predefined length determined based on a wave length of a radio signal used by a remote control 9 (see fig. 1). The antenna 22 is hence connected to a transceiver arrangement (not illustrated) configured to receive radio signals from the remote 9 and e.g. also transmit radio signals by means of the antenna 22, and the drive controller 10 may hence be operated based on radio signals received by means of the antenna 22.

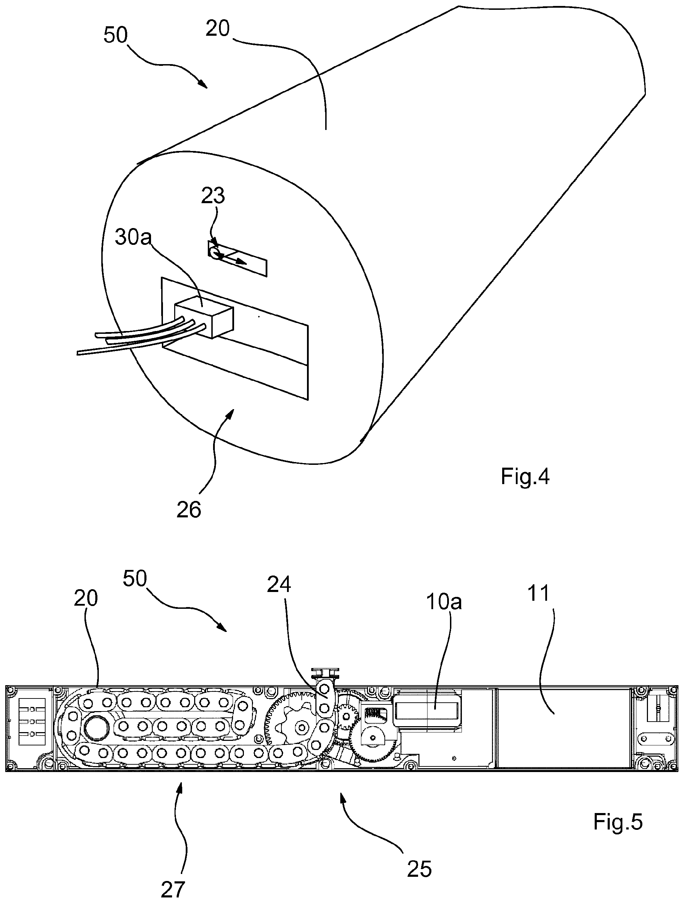

Fig. 4 illustrates schematically an embodiment of the present disclosure wherein the system 50 for operating the drive, as well as the drive unit 10a (see fig 1) are placed inside an oblong, tubular control system enclosure 20. Here, the photovoltaic panel connectors 12a is placed at an end of the control system enclosure 20. The control system enclosure 20 encloses at least the drive unit comprising an electric motor, a gearing arrangement and the rechargeable battery unit, and also the charging controller (3) (not visible in fig. 4). In further embodiments of the present disclosure, an on/off 23 switch may as illustrated be placed at the same end same end of the control system enclosure 20 as the photovoltaic panel connector 12a. The on/off switch 23 is configured to switches the system 50 on and off, and hence at least turn off the drive unit 10a and possibly also the charging controller 3 and/or the drive controller 10b (if present), when in off position.

The tubular enclosure 20 may in embodiments of the present disclosure enclose a tubular motor with an output wheel (not illustrated). Here, the first and the further photovoltaic panel connectors are placed at and accessible from the same end 26 of the tubular drive unit enclosure, and the output wheel is situated at an opposite end (not illustrated) of the enclosure 20 than the end 26 where the connector 12 is placed.

Fig. 5 illustrates schematically an embodiment of the present disclosure in the form of a system for operating a window, and comprising a push/pull chain 24. Power supply connector, photovoltaic power supply panels, boost converter, charging controller and the like are omitted from fig. 5 in order to improve simplicity of the figure.

The push/pull chain 24 is configured to move a sash of a window when operated by the drive unit 10a, which is connected to the chain through a gear arrangement 25.

The control system enclosure 20 also comprises a storage/battery for storing the push/pull chain when retracted into the enclosure/housing 20.The enclosure here has a rectangular, oblong shape.

Fig. 6 illustrates schematically a boost converter 14 controlled by means of a charging controller 3 according to embodiments of the present disclosure.

The boost converter 14 comprises a boost converter circuitry comprising an inductor L1, a capacitor CA1, a diode D1 and a switching arrangement Q1 such as a transistor coupled as shown in fig. 6 in order to provide a DC-DC Pulse Width Modulated (PWM) Switch mode power supply boost converter 14. The boost converter 14 may also be referred to as a step-up converter.

Filters such as capacitor-implemented filters (not illustrated in fig. 6) may also be provided in further embodiments of the present disclosure at the load/battery side of the converter 14 and/or at the input/supply side of the converter 14, in order to reduce undesired voltage ripples.

The charging controller 3, such as a suitable micro controller, is configured to control the switch Q1 of the boost converter in order to provide a desired PWM at the boost converter 14. This is provided by the PWM control signal 28.

The micro controller of the charging controller may in embodiments of the present disclosure comprise a 5 to 45 MHz, such as a 10 to 30 MHz, e.g. an around 20Mhz central processing unit (CPU) (values given as max. clock frequency of the CPU). The charging controller microcontroller may in embodiments of the present disclosure be a Microcontroller with Core Independent Peripherals.

The CPU clock frequency may however in embodiments of the present disclosure be reduced significantly compared to the max clock frequency, such as reduced with a factor of between 20 and 60, such as around 40. For example, the clock frequency of the CPU of the controller may be reduced to a clock frequency between 250 kHZ and 2 MHz, such as between 450 and 750 kHz in order to save power.

A Microcontroller with Core Independent Peripherals may be advantageous to use as it may allow a PWM signal functionality to be implemented with a desired (and adjustable) duty cycle and period time/frequency to control the boost converter's switch, while the remaining part of the charging controller 3 can enter sleep mode so as to save power.

The charging controller 3 hence received two inputs from measuring circuitries. The first input V_pv is a voltage measuring provided by a measuring circuitry 16a and is indicative of the voltage at/of the output of the photovoltaic pane113a.

The second input I_pv is a current measuring provided by a measuring circuitry 16b and is indicative of the electric current supplied by the photovoltaic panel 13 a.

In fig. 6 the photovoltaic panel 13a are connected to the Power supply system 2 by means of the connector 12a. The measuring of the parameters I_pv and V_pv are preferably provided so that the voltage measuring and current measuring is provided to represent the total output voltage.

The charging controller 3 provides a Maximum Power Point Tracking (MPPT) based on the measured inputs I_pv, V_pv and provides a control of the load on the panels 13a, 13b based on the measured input. This load control is provided by adjusting the PWM signal to the switch Q1 .

As can be seen in fig. 6, the charging controller 3 may in embodiments of the present disclosure be powered VCC_pv by the at least one photovoltaic power supply panel 13a and not the battery 11.

It is however understood that in one or more further embodiments of the present disclosure (not illustrated), the charging controller may be powered by the rechargeable battery instead of being powered by the at least one photovoltaic power supply panel 13a. In this case, the charging controller 3 may act as a further power consumption device powered by the rechargeable battery 11.

The charging controller 3 may in further embodiments of the present disclosure comprise a sleep mode which provides that the controller 3 enters a sleep mode, such as an "Idle sleep mode". Here, in the sleep mode, the Central Processing Unit of the controller 3 stops executing code, and an interrupt, such as a timer interrupt, can wake up the CPU again to execute stored program code for implementing the MPPT functionality.

However, even in sleep mode, a Main Clock of the charging controller 3 will run in order to control the switch by a switching frequency during sleep mode, which is set by the MPPT function before entering the sleep mode. This is done in order to provide a PWM of the boost controller 14 that fits or is near the Maximum Power Point of the photovoltaic panel, and that is provided automatically by the MPPT function.

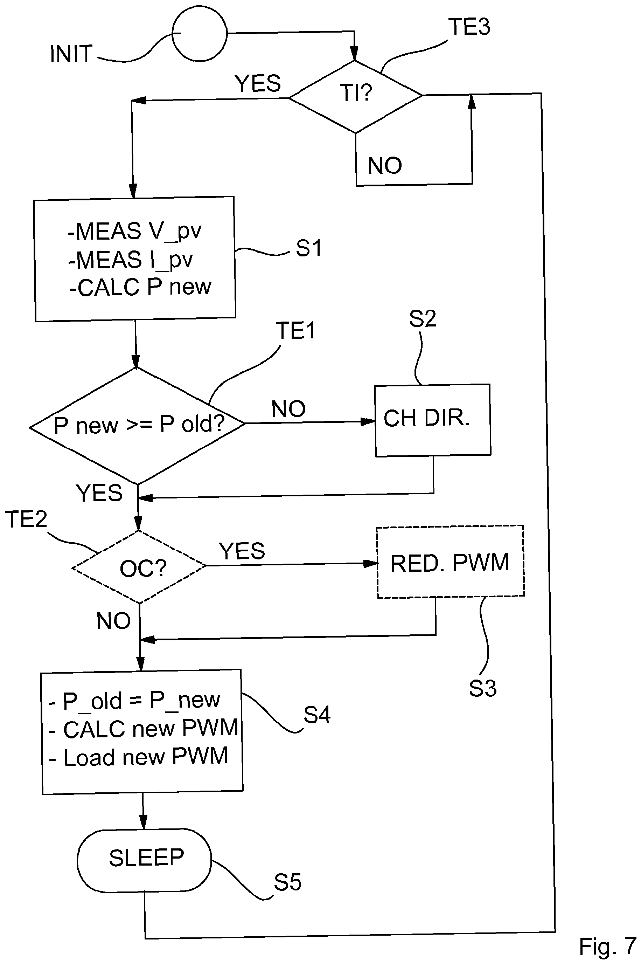

The MPPT function may e.g. in embodiments of the present disclosure provide a "Perturb and observe" MPPT regulation. Here, the controller 3 adjusts the load, such as by increasing the load on the photovoltaic panel by a small amount; if the power provided by the panel or panels 13a, 13b increases (based on I_pv and V_pv), further adjustments in that direction are tried until the power no longer increases. The MPPT functionality may then try to adjust the load by e.g. reducing the load In order to see if this increases to power output from the panel 13a. The MPPT function is executed when the charging controller 3 is not in sleep mode. The MPPT function is described in more details in fig. 7.

Fig. 7 illustrates a flow chart disclosing the operation of the charging controller 3 (see figs. 1 and 6) comprising a Maximum Power Point Tracking MPPT feature/functionality providing a "Perturb and Observe" feature according to embodiments of the present disclosure.

At the initial "power up" step (INIT) certain initiation functions of the Charging controller may be provided, such as initiating the main clock, setting or calculating a default /initial PWM, initiating interrupt functions, initiating ADC (Analog to digital converting circuitry) and/or the like. This may be applied after each time that the photovoltaic panel provides so small amount of power that the charging controller and boost converter simply power down due to lack of sufficient power. Then, the charging controller 3 goes to sleep.

At test TE3, the controller 3 checks if an interrupt, such as a timer interrupt is present, if yes, Step 1 (S1) is executed and hence the charging controller is activated/waken up from the sleep mode.

In Step 1, the charging controller 3 registers the measured Voltage V_pv (MEAS V_p) of the photovoltaic element 13a, or elements 13a, 13b, and also the measured supplied current I_pv (MEAS I_pv).

Based on these measurements, a new power value (P new) is calculated (CALC P new).

The power value P new may in embodiments of the present disclosure be calculated conventionally by multiplying the measured voltage with the measured current.

Then the charging controller tests at test TE1 whether the new power value of the photovoltaic element 13a, or elements 13a, 13b larger than or equal a previous old power value (P old).

If the new power value is not larger than or equal, the charging controller is set to change the PWM adjustment direction at step S2. Hereby, the PWM duty cycle (on time) and/or period time of the duty cycle may e.g. be reduced compared to the previous PWM or vice versa compared to the situation.

In test TE2, which is an optional test (as is step S3), the charging controller 3 tests whether a charging current is higher than a desired value/threshold, if it is, the Pulse Width Modulation is reduced in order to avoid an over current situation that may over time damage the battery.

The over current test TE2 may in embodiments of the present disclosure comprise comparing the measured current of the photovoltaic panel against a current threshold value. In case the measured current exceeds the current threshold (e.g. "Ipv>Ithr?"), the PWM frequency and/or duty cycle may be reduced in order to spare the battery. The current threshold may in embodiments of the present disclosure be set to a value between 50mA and 500mA, such as between 90mA and 300mA, e.g. between 110mA and 140mA,

In step S4, the older, prior, stored power value is replaced with the new power value P_new determined at step S1.

Additionally, a new Pulse Width Modulation value is calculated. This is provided based on the test TE1. For example, in case test TE1 provides the result that the new power value P new is higher than the previous, the PWM duty cycle and/or period time may be continued to be increased by a predefined amount or a calculated amount determined by the charging controller 3.

If P_new is however lower than P_old, the PWM may be regulated in another direction e.g. by instead reducing PWM duty cycle and/or period time (as set by Step S2 where the adjustment direction of the PWM signal is changed).

The Charging controller 3 may hence, according to one or more embodiments of the present disclosure, adjust the duty cycle, by adjusting the "on" time of the duty cycle and/or the period time of the duty cycle of PWM control signal 28, and hereby adjust the load applied on the panel 13a or panels 13a, 13b.

For example, the charging controller 3 may according to one or more embodiments of the present disclosure adjust the "on time" of the duty cycle of the PWM signal 28 dynamically to be within 1% to 60% of the period time dependent on the measured input (V_in, I_in) values.

Also or alternatively, the charging controller may according to one or more embodiments of the present disclosure adjust the period time of the duty cycle dynamically to be within a predefined range, such as within e.g. 1 microsecond to 4 milliseconds, such as within 2 microseconds to 3 milliseconds, such as such as within 5 microseconds to 2.5 milliseconds.

The new PWM value is then set/loaded so that the PWM signal for the switch (Q1 of fig. 6) of the boost converter 14 is changed to the new value, and used while the controller has entered sleep mode.

Then the charging controller in step S4 enter sleep mode, and the test TE3, such as a timer interrupt test, is awaited. When the timer interrupt TI? test turns out positive, the step S1 is executed again and so on.

The test TE1 and the steps S1, S2 and S4 accordingly provides a Maximum Power Point Tracking. Hence, even though the Maximum power point MPP of the photovoltaic panel(s) changes over time dependent on temperature, solar light intensity and other possible parameters, the charging controller 3 will continue to "hunt" a load setting (by adjusting the PWM frequency) that fits the Maximum power point MPP of the photovoltaic panel(s) in the given situation.

The tests TE2 and steps S1, S2 and S4 provides that the PWM signal such as the period time and/or the duty cycle "on time" applied to the boost converter switch, and hence the load applied to the photovoltaic panel(s), is either increased or decreased so as to so to say constantly "hunt" and adapt to the Maximum power point MPP of the installed photovoltaic panel(s) system when it changes over time.

Additionally, the MPPT feature provides an automatic adaption to the maximum power point MPP in the given situation no matter if one or two photovoltaic panels are connected to the connectors 12a, 12b.

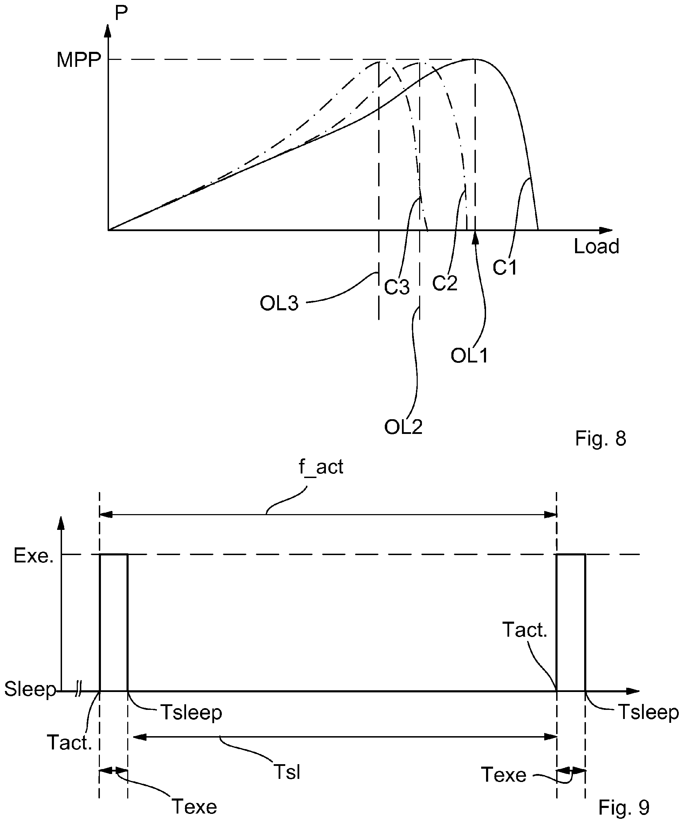

Fig. 8 illustrates an example where the Maximum Power Point MPP changes over time due to varying factors such as changes in solar light irradiation intensity and/or temperature over time. The Maximum power point MPP of the first, solid curve C1 is positioned where it is due to the present solar irradiation and e.g. also the present ambient temperature. When the solar irradiation and/or the ambient temperature changes, so may the position of the MPP, as illustrated by the dashed/dotted lines.

Accordingly, by measuring/sampling voltage and current of the panel(s) 13a, 13b, determining a calculated power derived therefrom, and comparing it to previous measured power value, the charging controller with the MPPT feature will automatically adapt the load on the first photovoltaic panel 13a or the first and further panels 13a, 13b to be at or near the optimal load OL1, OL2, OL3. Hence, the panel or panels 13a, 13b performs at the Maximum Power Point according to the present situation over time irrespectively of variations in the amount of available solar irradiation, ambient temperature and//or other relevant parameters.

Fig. 9 illustrates schematically the activity of a charging controller according to embodiments of the present disclosure.

At the activation time Tact, the charging controller is activated from the sleep mode, such as by an interrupt, e.g. a timer interrupt. Then, during an execution time span Texe, the controller executes the instructions of the Maximum power point tracking MPPT feature, such as illustrated and described in relation to Fig. 6, and possibly also other features such as e.g. Over voltage protection and/or over current protection.

When the charging controller has executed the instructions according to stored program code, the charging controller enters sleep mode again at the time Tsleep. The execution time span/period Texe is hence defined between the awakening/ activation time Tact. And the sleep time Tsleep.

The sleep time period Tsl is defined between the time Tsleep and the next activation time Tact. Here, during the sleep mode, the charging controller provides an adapted PWM signal that is determined during the execution time span/period Texe.

The activation frequency f act is as illustrated defined between two consecutive activation times (Tact).

The charging control system 3 is in embodiments of the present disclosure configured to be activated from the sleep mode at the activation time (Tact) with an activation frequency (f_act) less than 500 Hz, such as less than 50 Hz, such as less than 10 Hz.

The charging control system 3 may in embodiments of the present disclosure be configured to be activated from the sleep mode at the activation time (Tact) with a wakeup/activation frequency f act between 0.01 Hz and 500 Hz, such as between 0.5 Hz and 50 Hz, such as between 1 Hz and 10 Hz.

The charging control system 3 may in embodiments of the present disclosure be configured to be activated from the sleep mode at the activation time (Tact) with a wakeup/activation frequency f act between 0.03 Hz and 500 Hz, such as between 0.3 Hz and 50 Hz, such as between 1 Hz and 10 Hz.

For example, in embodiments of the present disclosure, in case the activation frequency (f act) is around 4 Hz, the period time of the activation frequency f act is around 250 ms, which is divided between the execution time period Texe and the sleep time Tsl.

It is understood that the charging control system is configured to be activated from the sleep mode at Tact, so as to execute the Maximum Power Point Tracking (MPPT) feature before the charging control system subsequently re-enters into the sleep mode again at Tsleep. Hence, for example, if the activation frequency is set to be e.g. 4Hz, the charging control system is activated from sleep mode 4 times per second, and hence executes the Maximum Power Point Tracking (MPPT) feature four times per second, and enters sleep mode after each execution of the Maximum Power Point Tracking (MPPT) feature.

However, in other embodiments of the present disclosure, the activation frequency (f act) may be larger than 500 Hz, such as between 500Hz and 100kHz, for example between 1 kHz and 50 kHz.

The ratio between the time span Texe, where the charging control system is configured to be active, and the time span Tsl where the charging control system is in sleep mode, respectively (i.e. $\frac{Texe}{Tsl}$) may in embodiments of the present disclosure be between 0.001 and 0.1 such as between 0.005 and 0.5, such as between 0.009 and 0.03.

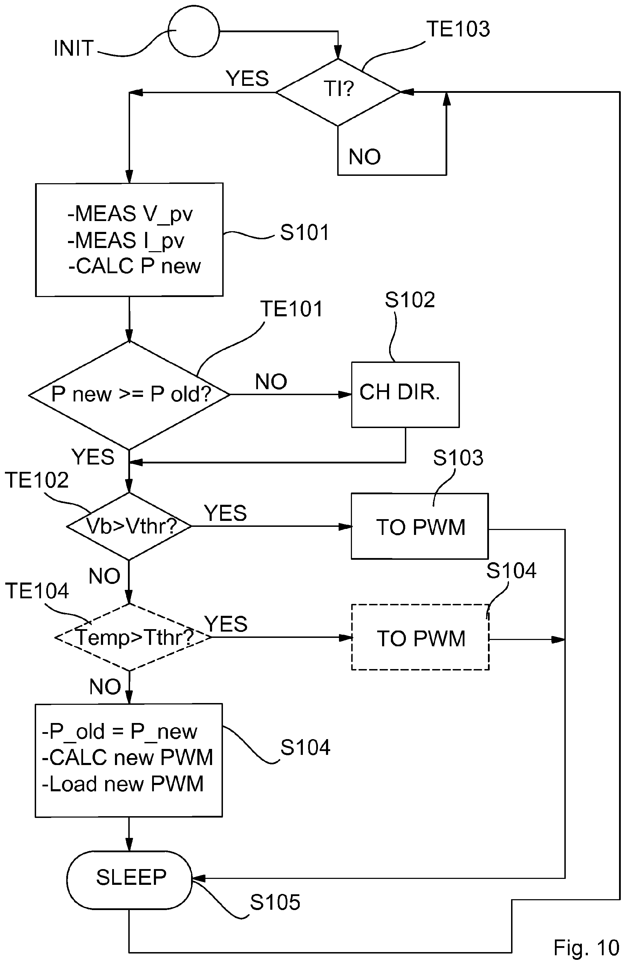

In one or more embodiments of the present disclosure, the time span Texe where the charging controller 3 is activated from sleep mode to execute instructions, such as e.g. according to a flow chart illustrated in fig. 7, fig. 10 and/or according to the description of one or both of said figures, may be between 0.1ms (millisecond) and 30 ms, such as between 0.5 ms and 10 ms. For example between 0.5ms and 5 ms.

For example, in aspects of the present disclosure, if the charging control system is active (Texe) for 3 milliseconds, and inactive for about 247 milliseconds (i.e. corresponding to a 4 Hz f act), the ratio between the time span where the charging control system 3 is configured to be active and in sleep mode respectively is $\left(\frac{3ms}{247ms}\right)$ = 0.012. Hence, the charging controller may only be active in this case for about 1.2% of the time, and in sleep mode the rest of the time Tsl.

It is generally understood that in embodiments of the present disclosure, the active time Texe may be between 0.1 ms and 50 ms, such as between 0.5 ms and 30 ms, for example between 0.8 ms and 10 ms, such as between 0.9 ms and 5 ms.

Fig. 10 illustrates a flow chart relating to the operation of the charging controller according to further embodiments of the present disclosure. Here, in addition to the MPPT feature provided by steps S101, test Te101, step S102 and step S104 (see Steps 1, Test TE1, Step S2 and Step S4 of fig. 7 and the description thereto), the charging controller provides an over voltage protection in test Te102 (Vb > Vthr) and step S103. Here, the charging controller is configured to compare an output voltage of the boost converter 14 (Vb) with an over voltage threshold (Vthr), such as a predefined over voltage threshold, before re-entering the sleep mode in step S105. This may as illustrated e.g. be provided before Step S4. In case the over voltage threshold Vthr is exceeded, the pulse width modulation is regulated in step 3, such as turned off (TO PWM), and then the controller enters sleep mode and omits executing step S4. This over voltage test TE2 is provided each time the charging controller is activated from the sleep mode (in case test TE3 turns out positive and e.g. a timer interrupt is present) to execute the MPPT feature.

This over voltage protection may help to protect components of the power supply system 2, in a power saving manner, against over voltage situations, such as in case of that the battery is removed or the connection to the battery is lost in one or the other way, as this may damage components of the power supply system due to an undesired voltage increase as there is no load on the photovoltaic panel.

The over voltage threshold may in embodiments of the present disclosure be set to between 13 V and 18V, such as between 14 V and 17V for example around 15 V dependent on the specific circumstances such as the characteristics, e.g. the rated voltage, of the rechargeable battery.

The charging controller may in one or more embodiments of the present disclosure also optionally (as illustrated) be configured to provide temperature test in order to determine if the ambient temperature is above or below a predetermined temperature threshold. For example, in embodiments of the present disclosure, the test may comprise that the charging controller tests (Te104) if the temperature of the microcontroller providing the charging controller is above a predefined threshold (Temp>Tthr?). If it is, the charging controller turns off the PWM signal at step S104 in order to avoid damaging the battery over time. This threshold may e.g. be between 30°C and 70°C, such as between 45°C and 55°C.

In further or alternative embodiments of the present disclosure, the temperature test may also or alternatively comprise that the charging controller tests (Te104) if the temperature of the microcontroller providing the charging controller is below at a predefined low temperature threshold (Temp>Tthr?), such as below 10°C, e.g. below 5°C, such as at or below 0°C. If it is, the charging controller turns off the PWM signal at step S104, thereby turning off the boost converter in order to avoid damaging the battery over time. This may e.g. be especially relevant if the battery is a Lithium ion (Li-ion) battery.

However, if the charging comptroller determines that the temperature is within, such as above and/or below a predefined temperature threshold (and test TE104 hence turns out negative as illustrated), the charging by means of the boost converter is continued, and the PWM signal is adjusted in step S104 before the controller re-enters sleep mode.

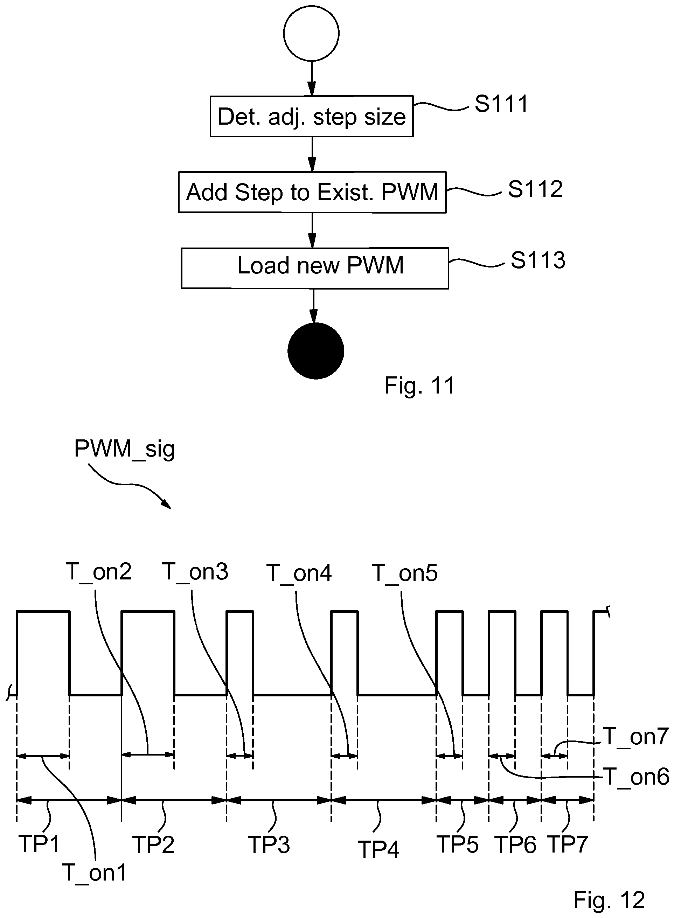

Fig. 11 illustrates an embodiment of the present disclosure wherein the adjustment of the duty cycle is dynamically performed. Such as in step S4 or 104 of Figs. 7 or 10 (CALC new PWM).

Here, in Step 111, the charging controller determines the size/magnitude of the adjustment step to be provided.

In embodiments of the present disclosure, the charging controller provides an adjustment step size calculation where a present pulse width modulation parameter, such as the duty cycle on time and/or the period time of the duty cycle is divided with a predetermined constant:

The constant k may in embodiments of the present disclosure be between 4 and 50, such as between 7 and 25, for example between 12 and 18.

$$\text{Adjustment step} = \left(\frac{\text{PWM parameter}}{k}\right)$$

For example, in case the present period time of the duty cycle for the switch of the boost converter is 160 micro seconds, and the constant k is 16 then the step size to be provided is:

$$\text{Adjustment step} = \left(\frac{160}{16}\right) = 10 \text{ us.}$$

The adjustment direction (such as if the duty cycle and/or time period should be reduced or increased) is determined previously based on if the new calculated power is higher than the prior power value or not, see e.g. test TE01 of fig. 7 or test TE101 of fig. 10. Hence, this Adjustment step size of 10 us is added to or subtracted from to the existing pulse width period time (in step S112) dependent on the selected adjustment direction. In the example above, the duty cycle time period will be adjusted to either 150us or 170us dependent on the regulation direction

A similar calculation may in further embodiments of the present disclosure be provided for the Duty cycle on time.

In one or more embodiments of the present disclosure, the On-time of the Duty cycle may be adjusted by the MPPT functionality in a range between about 0.1% and 60% (60% corresponding to an on time of 60% of the duty cycle period time), such as within 1% and 50% (both end points included).

In one or more embodiments of the present disclosure, the period time of the Duty cycle applied to the switch of the boost converter may be adjusted by the MPPT functionality of the charging controller to be in a range between 1 microsecond (us) and 4 milliseconds, such as between 4 micro seconds and 3 milliseconds, for example between such as between 5 micro seconds and 2.5 milliseconds.

For example, in embodiments of the present disclosure, the switch frequency of the PWM signal may be varied by the charging controller between 100 Hz and 400kHz, such as between 250Hz and 250000Hz based on one or more measured inputs such as a measured voltage and/or current (and a power calculation based thereon) as e.g. described previously.

In one or more embodiments of the present disclosure (not illustrated), the charging controller may alternatively be configured to provide an integration or a differential calculation (e.g. a $\frac{dP}{dt}$ calculation) in order to determine the adjustment step size/magnitude. This may be done over a running predefined time period, or based on a plurality of stored sample values of a PWM parameter value or stored power values.

Also or alternatively, in further embodiments of the present disclosure, a lookup table stored in a data storage (not illustrated) may be utilized, containing a desired step size value dependent on the actual PWM parameter value such as duty cycle on time value and/or the period time of the duty cycle.

The new PWM signal value is then loaded and applied to the switch of the boost converter (step S113) before entering sleep mode again so that the battery is charged with power from the photovoltaic panel while the charging controller/control system is in sleep mode.

Fig. 12 illustrates an embodiment of the present disclosure, wherein a pulse width modulated (PWM) signal PWM_sig for controlling the switch of the boost converter is changed over time by means of the MPPT feature of the boost converter. The example is for explanatory purpose only, and the number of whole period times between the duty cycle changes, and the order and magnitude of the illustrated changes are merely provided in order to describe embodiments of the PWM control provided by the charging controller's MPPT feature.

The two period times TP1, TP2 are identical (TP1=TP2). The duty cycle "on time" T_on1 and T_on2, are also identical, and in the present example corresponds to a 50% duty cycle for each period times TP1, TP2 of the PWM signal.

However, at the following period times TP3, TP4, the MPPT feature of the charging controller 3 has provided a duty cycle "On time" change, so that the duty cycle has been reduced to an about 25% duty cycle, so that the boost converter's switch is on 25% of the period times TP3, TP4. However, the period time TP3 and TP4 is maintained to be the same as for period times TP1, TP2.

At the subsequent period times TP5, TP6 and TP7, the MPPT feature of the charging controller 3 has provided a period time adjustment due to the measured parameters of the photovoltaic panel, and hence reduced the period time to about the half of the previous period times TP1-TP4 The duty cycle time on time T_on5-T_on7 for the period times TP5-TP7 is here again about 50%.

The MPPT feature of the charging controller hence provides an adaption of the PWM signal PWM_sig controlling the switch of the boost converter over time in order to adapt the load on the photovoltaic panel, and thereby so to say hunt the Maximum power point of the photovoltaic panel over time when the sunlight/sun irradiation and/or ambient temperature changes.

While the present disclosure has been described in detail in connection with only a limited number of embodiments or aspects, it should be readily understood that the present disclosure is not limited to such disclosed embodiments or aspects. Rather, the present disclosure can be modified to incorporate any number of variations, alterations, substitutions or equivalent arrangements not heretofore described, but which are commensurate in scope with the present disclosure. Additionally, while various embodiments or aspects of the present disclosure have been described, it is to be understood that aspects of the present disclosure may include only some of the described embodiments or aspects or combinations of the various embodiments or aspects. Accordingly, the present disclosure is not to be seen as limited by the foregoing description.

List

| | |
|---|---|
| 1 | : Window or architectural covering system |
| 2 | : Power supply system |
| 3 | : Charging controller |
| 4 | : Window |
| 5 | : Architectural covering such as a blind or roller shutter |
| 6 | : Sash of window |
| 7 | : Pane in window sash |
| 8 | : Fixed frame of window |
| 9 | : Remote control |
| 10a, 10b | : Power consumption devices |
| 11 | : Rechargeable storage/battery unit |
| 12a | : First power supply connector |
| 12b | : Second further power supply connector |
| 13a | : First photovoltaic power supply panel |
| 13b | : Further photovoltaic power supply panel |
| 14 | : Boost converter circuitry |
| 15 | : Printed Circuit Board |
| 16 | : Measuring circuitry such as voltage and/or current measuring circuitry |
| 17 | : Measured input to charging controller |
| 18 | : Maximum Power Point Tracking (MPPT) system |
| 19a | : Wire between first photovoltaic power supply panel and first connector |
| 19b | : Wire between second photovoltaic power supply panel and second connector |
| 20 | : Control system enclosure |
| 21a-21c | : connection parts for providing galvanic connections |
| 22 | : Antenna |
| 23 | : On/off switch |
| 24 | : Push/pull chain |
| 25 | : Gear arrangement |
| 26 | : End of housing/enclosure 20 |
| 27 | : Chain storage |
| 28, PWM_sig | : PWM control signal |
| 29 | : Parallel coupling |
| 30a, 30b | : Plug or socket on electric wire of photovoltaic power supply panel. |
| 31 | : Mounting track |
| 50 | : System for operating window or architectural covering |
| CA1 | : Capacitor of boost converter |
| D1 | : Diode of boost converter |
| L1 | : Inductor if boost converter |
| Q1 | : Boost converter switch |

TP1-TP7 : Duty cycle period time of PWM signal

T_on1-T_on7 : On time of PWM signal duty cycle.

f act : activation frequency for activating/wakening charging controller from sleep mode

Tsl : Sleep time period where the charging controller is in sleep mode

Tsleep : Time point where the charging controller enters sleep mode

Tact : Time point where the charging controller is waken up/activated from sleep mode

Texe : Execution time period where MPPT feature and/or other features are executed by the charging controller before re-entering sleep mode

## Claims

1. A window (4) and/or architectural covering (5) system (1) comprising a window (4) and/or architectural covering (5) and a control system (50, 50a, 50b) for operating the window or architectural covering, wherein the control system (50, 50a, 50b) comprises at least one power consumption device (10a, 10b) comprising at least an electrically driven drive unit (10a) for controlling the setting of said window or architectural covering, and a power supply system (2) configured to power the at least one power consumption device (10a,10b), wherein the power supply system (2) comprises:

   - a rechargeable battery (11) configured to store electric power and supply electric power to said at least one power consumption device (10a,10b),
   - at least one photovoltaic power supply panel (13a) arranged to charge the rechargeable battery (11),
   - a Pulse Width Modulated (PWM) boost converter (14) for stepping up the output voltage from the at least one photovoltaic power supply panel (13a), and
   - a charging control system (3) configured to control the charging of the rechargeable battery (11),

   wherein the charging control system (3) comprises:

   - a Maximum Power Point Tracking (MPPT) feature which when executed is configured to retrieve one or more output parameters (V_pv, I_pv) from the at least one photovoltaic power supply panel (13a) and adapt the pulse width modulation (PWM_sig, 28) of the boost converter (14) based thereon, and
   - a sleep mode function for power saving,

wherein the charging control system (3) is configured to be activated (Tact) from the sleep mode to execute the Maximum Power Point Tracking (MPPT) feature, wherein said activation from the sleep mode is configured to be provided with an activation frequency (f act) less than 500 Hz, such as less than 50 Hz, such as less than 10 Hz.

2. A window and/or architectural covering system (1) according to claim 1, wherein the charging control system (3) is configured to be powered by the at least one photovoltaic power supply panel (13a).

3. A window and/or architectural covering system (1) according to any of the preceding claims, wherein the one or more output parameters of the at least one photovoltaic power supply panel (13a) comprises

   - a measured output voltage of the at least one photovoltaic power supply panel (13a) and/or
   - a measured output current of the at least one photovoltaic power supply panel (13a)

4. A window and/or architectural covering system (1) according to any of the preceding claims, wherein the Maximum Power Point Tracking (MPPT) feature is configured to compare (TE1, TE101) at least one parameter, such as a power value (P new) calculated based on said one or more output parameters (V_pv, I_pv), to a previously stored value (P old), and based thereon provide said adaption (S4, S104) of the pulse width modulation (PWM_sig, 28) of the boost converter (14), to be applied to a switch (Q1) of the boost converter (14) after the charging control system (3) has re-entered the sleep mode.

5. A window and/or architectural covering system (1) according to any of the preceding claims, wherein said rechargeable battery unit (11) has a rated power between 5Wh and 50Wh, such as between 10 Wh and 35 Wh, such as between 14 Wh and 26 Wh.

6. A window and/or architectural covering system (1) according to any of the preceding claims, wherein the ratio $\left(\frac{\text{Texe}}{\text{Tsl}}\right)$ between the time span where the charging control system (3) is configured to be active (Texe) and in sleep mode (Tsl) respectively, is between 0.001 and 0.1 such as between 0.005 and 0.1, such as between 0.009 and 0.03.

7. A window or architectural covering system according to any of the preceding claims, wherein a predefined timer interrupt (TI) is configured to provide said activation of the charging control system with said activation frequency (f act) so as to execute the Maximum Power Point Tracking (MPPT) feature.

8. A window or architectural covering system according to any of the preceding claims, wherein the charging control system (3) is configured to be activated (Tact) from the sleep mode to execute the Maximum Power Point Tracking (MPPT) feature with an activation frequency (f act) between 0.03 Hz and 500 Hz, such as between 0.3 Hz and 50 Hz, such as between 1 Hz and 10 Hz.

9. A window or architectural covering system according to any of the preceding claims, wherein the at least one photovoltaic power supply panel (13a) has a maximum output voltage that is below 10V DC, such as below 8V DC, for example below 6V DC, such as around 4.2V DC.

10. A window or architectural covering system according to any of the preceding claims, wherein the at least one photovoltaic power supply panel (13a) has a maximum output voltage that is at least 1.3 times lower, such as at least 2 times lower, for example at least 2.5 times lower than the maximum output voltage of the rechargeable battery.

11. A window or architectural covering system according to any of the preceding claims, wherein the charging control system (3), in addition to executing said Maximum Power Point Tracking (MPPT) feature, moreover is configured to execute one or more safety measure evaluations (TE2, TE102, TE104) before re-entering said sleep mode, and wherein the charging control system (3) is configured to control the PWM signal (28, PWM_sig) of the boost converter (14), such as by reducing or turning off the PWM signal controlling the switch (Q1) of the boost converter (14), if one or more thresholds (Vthr, Tthr) is/are exceeded according to said one or more safety measure evaluations .

12. A window and/or architectural covering system (1) according to any of the preceding claims, wherein said charging controller (3), before re-entering said sleep mode, is moreover configured to compare an output voltage of the boost converter (14) with an over voltage threshold, and adjust the pulse with modulation (PWM) of a switch (Q1) of the boost converter, if the output voltage of the boost converter (14) exceeds the over voltage threshold, such as wherein said adjustment, if the output voltage of the boost converter (14) exceeds the over voltage threshold, comprises reducing the duty cycle on time (T_on1 - T_on7) and/or increasing or reducing the period time (TP1-TP7) of the duty cycle, or turning off the pulse width modulation.

13. A window and/or architectural covering system (1) according to any of the preceding claims, wherein said charging controller (3), before re-entering said sleep mode, moreover is configured to provide an over current protection by comparing a charging current value to an over current threshold, and adjust the pulse width modulation (PWM), such as by reducing the duty cycle on time (T_on1-T_on7) and/or increasing or reducing the period time (TP1-TP7) of the duty cycle, based thereon.

14. A window or architectural covering system according to any of the preceding claims, wherein the electrically driven drive unit (10a), the rechargeable battery (11) and the charging control system (3) are placed in the same device, such as inside a common housing (20), which is attached to or a part of the window (4) or architectural covering (5) system.

15. A window or architectural covering system according to any of the preceding claims, further comprising a drive controller (10b) configured to control the electrically driven drive unit (10a), such as wherein the drive controller (10b) is configured to automatically initiate an operation of the electrically driven drive unit (10a) according to a predefined set of rules based on input information such as one or more of temperature sensor information, light sensor information, time information, force sensor information determined based on one or more force sensors such as one or more strain gauges rain sensor information and/or battery status information.

16. An electric, battery powered control system (50, 50a, 50b) configured to operate a window or architectural covering, wherein said control system (50, 50a, 50b) comprises

at least one power consumption device (10a, 10b) comprising at least an electrically driven drive unit (10a), such as an electric tubular motor drive or a chain actuator drive, configured to adjust the window or architectural covering when connected thereto, and
a power supply system (2) configured to power the power consumption devices (10a-10d), wherein the power supply system (2) comprises:

- a rechargeable battery (11) configured to store electric power and supply electric power to said at least one power consumption device (10a, 10b),

- at least one photovoltaic power supply panel (13a) configured to recharge the rechargeable battery unit (11),
- a Pulse Width Modulated (PWM) boost converter (14) configured to step up the output voltage of the at least one photovoltaic power supply panel (13a), and
- a charging control system (3) configured to control the re-charging of the rechargeable battery (11),

wherein the charging control system (3) comprises:

- a Maximum Power Point Tracking (MPPT) feature which when executed is configured to adapt the pulse width modulation (PWM_sig, 28) of the boost converter (14) based on one or more retrieved output parameters (V_pv, I_pv) from the at least one photovoltaic power supply panel (13a), and
- a sleep mode function configured for power saving,

wherein the charging control system (3) is configured to be activated from the sleep mode to execute the Maximum Power Point Tracking (MPPT) feature, wherein said activation from the sleep mode is configured to be provided with an activation frequency (f act) less than 500 Hz, such as less than 50 Hz, such as less than 10 Hz, such as wherein the charging control system (3) is configured to be powered by the at least one photovoltaic power supply panel (13a).

**Patentansprüche**

1. System (1) eines Fensters (4) und/oder einer architektonischen Abdeckung (5), das ein Fenster (4) und/oder eine architektonische Abdeckung (5) und ein Steuersystem (50, 50a, 50b) zum Betreiben des Fensters oder der architektonischen Abdeckung umfasst,

   wobei das Steuersystem (50, 50a, 50b) mindestens eine Leistungsverbrauchsvorrichtung (10a, 10b) umfasst, die mindestens eine elektrisch angetriebene Antriebseinheit (10a) zum Steuern der Einstellung des Fensters oder der architektonischen Abdeckung umfasst, und ein Leistungsversorgungssystem (2), das konfiguriert ist, um die mindestens eine Leistungsverbrauchsvorrichtung (10a, 10b) mit Leistung zu versorgen,
   wobei das Leistungsversorgungssystem (2) umfasst:

- eine wiederaufladbare Batterie (11), die konfiguriert ist, um elektrische Leistung zu speichern und die mindestens eine Leistungsverbrauchsvorrichtung (10a, 10b) mit elektrischer Leistung zu versorgen,
- mindestens ein photovoltaisches Leistungsversorgungspanel (13a), das eingerichtet ist, um die wiederaufladbare Batterie (11) zu laden,
- einen pulsweitenmodulierten (PWM) Boost-Wandler (14) zum Hochfahren der Ausgangsspannung von dem mindestens einen photovoltaischen Leistungsversorgungspanel (13a), und
- ein Ladesteuersystem (3), das konfiguriert ist, um das Laden der wiederaufladbaren Batterie (11) zu steuern,

wobei das Ladesteuersystem (3) umfasst:

- ein Maximum Power Point Tracking (MPPT)-Merkmal, das, wenn es ausgeführt wird, konfiguriert ist, um einen oder mehrere Ausgangsparameter (V_pv, I_pv) von dem mindestens einen photovoltaischen Leistungsversorgungspanel (13a) abzurufen und die Pulsweitenmodulation (PWM_sig, 28) des Boost-Wandlers (14) basierend darauf anzupassen, und
- eine Ruhemodusfunktion zur Leistungssparung,

wobei das Ladesteuersystem (3) konfiguriert ist, um aus dem Ruhemodus aktiviert (Tact) zu werden, um das Maximum Power Point Tracking (MPPT)-Merkmal auszuführen, wobei die Aktivierung aus dem Ruhemodus konfiguriert ist, um eine Aktivierungsfrequenz (f_act) bereitgestellt zu bekommen, die kleiner als 500 Hz ist, wie etwa kleiner als 50 Hz, wie etwa kleiner als 10 Hz.

2. System (1) eines Fensters und/oder einer architektonischen Abdeckung nach Anspruch 1, wobei das Ladesteuersystem (3) konfiguriert ist, um von dem mindestens einen photovoltaischen Leistungsversorgungspanel (13a) mit Leistung versorgt zu werden.

3. System (1) eines Fensters und/oder einer architektonischen Abdeckung nach einem der vorhergehenden Ansprüche, wobei der eine oder die mehreren Ausgangsparameter des mindestens einen photovoltaischen Stromversorgungspanels (13a) umfassen

   - eine gemessene Ausgangsspannung des mindestens einen photovoltaischen Stromversorgungspanels (13a) und/oder
- einen gemessenen Ausgangsstrom des mindestens einen photovoltaischen Stromversorgungspanels (13a).

**4.** System (1) eines Fensters und/oder einer architektonischen Abdeckung nach einem der vorhergehenden Ansprüche, wobei das Maximum Power Point Tracking (MPPT)-Merkmal konfiguriert ist, um mindestens einen Parameter, wie etwa einen Leistungswert (P new), der basierend auf dem einen oder den mehreren Ausgangsparametern (V_pv, I_pv) berechnet wird, mit einem zuvor gespeicherten Wert (P old) zu vergleichen (TE1, TE101), und basierend darauf die Anpassung (S4, S104) der Pulsweitenmodulation (PWM_sig, 28) des Boost-Wandlers (14) bereitzustellen, die auf einen Schalter (Q1) des Boost-Wandlers (14) angewendet werden soll, nachdem das Ladesteuersystem (3) wieder in den Ruhemodus eingetreten ist.

**5.** System (1) eines Fensters und/oder einer architektonischen Abdeckung nach einem der vorhergehenden Ansprüche, wobei die wiederaufladbare Batterieeinheit (11) eine Nennleistung zwischen 5 Wh und 50 Wh, wie etwa zwischen 10 Wh und 35 Wh, wie etwa zwischen 14 Wh und 26 Wh, aufweist.

**6.** System (1) eines Fensters und/oder einer architektonischen Abdeckung nach einem der vorhergehenden Ansprüche, wobei das Verhältnis $\left(\left(\frac{\text{Texe}}{\text{Tsl}}\right)\right)$ zwischen der Zeitspanne, in der das Ladesteuersystem (3) konfiguriert ist, um aktiv (Texe) und im Ruhemodus (Tsl) zu sein, zwischen 0,001 und 0,1, wie etwa zwischen 0,005 und 0,1, wie etwa zwischen 0,009 und 0,03, liegt.

**7.** System eines Fensters oder einer architektonischen Abdeckung nach einem der vorhergehenden Ansprüche, wobei eine vordefinierte Zeitgeberunterbrechung (TI) konfiguriert ist, um die Aktivierung des Ladesteuersystems mit der Aktivierungsfrequenz (f_act) bereitzustellen, um das Maximum Power Point Tracking (MPPT)-Merkmal auszuführen.

**8.** System eines Fensters oder einer architektonischen Abdeckung nach einem der vorhergehenden Ansprüche, wobei das Ladesteuersystem (3) konfiguriert ist, um aus dem Ruhemodus aktiviert (Tact) zu werden, um das Maximum Power Point Tracking (MPPT)-Merkmal mit einer Aktivierungsfrequenz (f_act) zwischen 0,03 Hz und 500 Hz, wie etwa zwischen 0,3 Hz und 50 Hz, wie etwa zwischen 1 Hz und 10 Hz auszuführen.

**9.** System eines Fensters oder einer architektonischen Abdeckung nach einem der vorhergehenden Ansprüche, wobei das mindestens eine photovoltaische Leistungsversorgungspanel (13a) eine maximale Ausgangsspannung aufweist, die unter 10V DC, wie etwa unter 8V DC, zum Beispiel unter 6V DC, wie etwa ungefähr 4,2V DC ist.

**10.** System eines Fensters oder einer architektonischen Abdeckung nach einem der vorhergehenden Ansprüche, wobei das mindestens eine photovoltaische Leistungsversorgungspanel (13a) eine maximale Ausgangsspannung aufweist, die mindestens 1,3 mal niedriger ist, wie etwa mindestens 2 mal niedriger, zum Beispiel mindestens 2,5 mal niedriger als die maximale Ausgangsspannung der wiederaufladbaren Batterie.

**11.** System eines Fensters oder einer architektonischen Abdeckung nach einem der vorhergehenden Ansprüche, wobei das Ladesteuersystem (3) zusätzlich zum Ausführen des Maximum Power Point Tracking (MPPT)-Merkmals ferner konfiguriert ist, um eine oder mehrere Sicherheitsmaßauswertungen (TE2, TE102, TE104) vor dem Wiedereintritt in den Ruhemodus auszuführen, und wobei das Ladesteuersystem (3) konfiguriert ist, um das PWM-Signal (28, PWM_sig) des Boost-Wandlers (14) zu steuern, wie etwa durch Reduzieren oder Ausschalten des PWM-Signals, das den Schalter (Q1) des Boost-Wandlers (14) steuert, wenn ein oder mehrere Schwellenwerte (Vthr, Tthr) gemäß der einen oder den mehreren Sicherheitsmaßauswertungen überschritten wird/werden.

**12.** System (1) eines Fensters und/oder einer architektonischen Abdeckung nach einem der vorhergehenden Ansprüche, wobei die Ladesteuerung (3) vor dem Wiedereintritt in den Ruhemodus ferner konfiguriert ist, um eine Ausgangsspannung des Boost-Wandlers (14) mit einem Überspannungsschwellenwert zu vergleichen und die Pulsweitenmodulation (PWM) eines Schalters (Q1) des Boost-Wandlers einzustellen, wenn die Ausgangsspannung des Boost-Wandlers (14) den Überspannungsschwellenwert überschreitet,
wie etwa wobei die Einstellung, wenn die Ausgangsspannung des Boost-Wandlers (14) den Überspannungsschwellenwert überschreitet, das Reduzieren des Tastverhältnisses auf der Zeit (T_on1 - T_on7) und/oder das Erhöhen oder Reduzieren der Periodenzeit (TP1-TP7) des Tastverhältnisses oder das Ausschalten der Pulsweitenmodulation umfasst.

**13.** System (1) eines Fensters und/oder einer architektonischen Abdeckung nach einem der vorhergehenden Ansprüche, wobei die Ladesteuerung (3) vor dem Wiedereintritt in den Ruhemodus ferner konfiguriert ist, um einen Überstromschutz durch Vergleichen eines Ladestromwerts mit einem Überstromschwellenwert bereitzustellen und die Pulsweitenmodulation (PWM) einzustellen, wie etwa durch Reduzieren des Tastverhältnisses auf der Zeit (T_on1 - T_on7) und/oder Erhöhen oder Reduzieren der Periodenzeit (TP1-TP7) des Tastverhältnisses, basierend darauf.

14. System eines Fensters oder einer architektonischen Abdeckung nach einem der vorhergehenden Ansprüche, wobei die elektrisch angetriebene Antriebseinheit (10a), die wiederaufladbare Batterie (11) und das Ladesteuersystem (3) in derselben Vorrichtung, wie etwa in einem gemeinsamen Gehäuse (20), angeordnet sind, das an System des Fensters (4) oder der architektonischen Abdeckung (5) angebracht ist oder ein Teil davon ist.

15. System eines Fensters oder einer architektonischen Abdeckung nach einem der vorhergehenden Ansprüche, ferner umfassend eine Antriebssteuerung (10b), die konfiguriert ist, um die elektrisch angetriebene Antriebseinheit (10a) zu steuern, wie etwa wobei die Antriebssteuerung (10b) konfiguriert ist, um automatisch einen Betrieb der elektrisch angetriebenen Antriebseinheit (10a) gemäß einem vordefinierten Satz von Regeln basierend auf Eingabeinformationen einzuleiten, wie etwa eines oder mehrere von Temperatursensorinformationen, Lichtsensorinformationen, Zeitinformationen, Kraftsensorinformationen, die basierend auf einem oder mehreren Kraftsensoren, wie etwa einem oder mehreren Dehnungsmessstreifen, Regensensorinformationen und/oder Batteriestatusinformationen bestimmt werden.

16. Elektrisches, batteriebetriebenes Steuersystem (50, 50a, 50b), das konfiguriert ist, um ein Fenster oder eine architektonische Abdeckung zu betreiben, wobei das Steuersystem (50, 50a, 50b) umfasst

mindestens eine Leistungsverbrauchsvorrichtung (10a, 10b), die mindestens eine elektrisch angetriebene Antriebseinheit (10a), wie etwa einen elektrischen Rohrmotorantrieb oder einen Kettenstellantrieb, umfasst, die konfiguriert ist, um das Fenster oder die architektonische Abdeckung einzustellen, wenn sie damit verbunden ist, und
ein Leistungsversorgungssystem (2), das konfiguriert ist, um die Leistungsverbrauchsvorrichtungen (10a-10d) mit Leistung zu versorgen, wobei das Leistungsversorgungssystem (2) umfasst:

- eine wiederaufladbare Batterie (11), die konfiguriert ist, um elektrische Leistung zu speichern und die mindestens eine Leistungsverbrauchsvorrichtung (10a, 10b) mit elektrischer Leistung zu versorgen,
- mindestens ein photovoltaisches Leistungsversorgungspanel (13a), das konfiguriert ist, um die wiederaufladbare Batterieeinheit (11) wiederaufzuladen,
- einen pulsweitenmodulierten (PWM) Boost-Wandler (14), der konfiguriert ist, um die Ausgangsspannung von dem mindestens einen photovoltaischen Leistungsversorgungspanel (13a) hochzufahren, und
- ein Ladesteuersystem (3), das konfiguriert ist, um das Wiederaufladen der wiederaufladbaren Batterie (11) zu steuern,

wobei das Ladesteuersystem (3) umfasst:

- ein Maximum Power Point Tracking (MPPT)-Merkmal, das, wenn es ausgeführt wird, konfiguriert ist, um die Pulsweitenmodulation (PWM_sig, 28) des Boost-Wandlers (14) basierend auf einem oder mehreren abgerufenen Ausgangsparametern (V_pv, I_pv) von dem mindestens einen photovoltaischen Leistungsversorgungspanel (13a) anzugleichen, und
- eine Ruhemodusfunktion, die zur Leistungssparung konfiguriert ist,

wobei das Ladesteuersystem (3) konfiguriert ist, um aus dem Ruhemodus aktiviert zu werden, um das Maximum Power Point Tracking (MPPT)-Merkmal auszuführen, wobei die Aktivierung aus dem Ruhemodus konfiguriert ist, um eine Aktivierungsfrequenz (f_act) bereitgestellt zu bekommen, die kleiner als 500 Hz ist, wie beispielsweise kleiner als 50 Hz, wie beispielsweise kleiner als 10 Hz, wie etwa wobei das Ladesteuersystem (3) konfiguriert ist, um von dem mindestens einen photovoltaischen Leistungsversorgungspanel (13a) mit Leistung versorgt zu werden.

## Revendications

1. Système (1) de fenêtre (4) et / ou de couverture architecturale (5) comprenant une fenêtre (4) et / ou une couverture architecturale (5) et un système de commande (50, 50a, 50b) pour faire fonctionner la fenêtre ou la couverture architecturale,

dans lequel le système de commande (50, 50a, 50b) comprend au moins un dispositif de consommation d'énergie (10a, 10b) comprenant au moins une unité d'entraînement entraînée électriquement (10a) pour commander le réglage de ladite fenêtre ou de ladite couverture architecturale, et un système d'alimentation électrique (2) configuré pour alimenter l'au moins un dispositif de consommation d'énergie (10a, 10b), dans lequel le système d'alimentation électrique (2) comprend :

- une batterie rechargeable (11) configurée pour stocker de l'énergie électrique et fournir de l'énergie électrique audit au moins un dispositif de consommation d'énergie (10a, 10b),
- au moins un panneau d'alimentation photovoltaïque (13a) agencé pour charger la batterie rechargeable (11),
- un convertisseur élévateur à modulation de largeur d'impulsion (PWM) (14) pour élever la tension de sortie à partir de l'au moins un panneau d'alimentation photovoltaïque (13a), et
- un système de commande de charge (3) configuré pour commander la charge de la batterie rechargeable (11),

dans lequel le système de commande de charge (3) comprend :

- une fonction de suivi du point de puissance maximale (MPPT) qui, lorsqu'elle est exécutée, est configurée pour récupérer un ou plusieurs paramètres de sortie (V_pv, I_pv) à partir de l'au moins un panneau d'alimentation photovoltaïque (13a) et adapter la modulation de largeur d'impulsion (PWM_sig, 28) du convertisseur élévateur (14) basé sur celui-ci, et
- une fonction mode veille pour économiser de l'énergie,

dans lequel le système de commande de charge (3) est configuré pour être activé (Tact) à partir du mode veille pour exécuter la fonction de suivi du point de puissance maximale (MPPT), dans lequel ladite activation à partir du mode veille est configurée pour être pourvue d'une fréquence d'activation (f_act) inférieure à 500 Hz, telle qu'inférieure à 50 Hz, telle qu'inférieure à 10 Hz.

**2.** Système (1) de fenêtre et / ou de couverture architecturale selon la revendication 1, dans lequel le système de commande de charge (3) est configuré pour être alimenté par l'au moins un panneau d'alimentation photovoltaïque (13a).

**3.** Système (1) de fenêtre et / ou de couverture architecturale selon l'une quelconque des revendications précédentes, dans lequel le ou les paramètres de sortie de l'au moins un panneau d'alimentation photovoltaïque (13a) comprend

- une tension de sortie mesurée de l'au moins un panneau d'alimentation photovoltaïque (13a), et/ ou
- un courant de sortie mesuré de l'au moins un panneau d'alimentation photovoltaïque (13a).

**4.** Système (1) de fenêtre et / ou de couverture architecturale selon l'une quelconque des revendications précédentes, dans lequel la fonction de suivi du point de puissance maximale (MPPT) est configurée pour comparer (TE1, TE101) au moins un paramètre, tel qu'une valeur de puissance (P new) calculée sur la base desdits un ou plusieurs paramètres de sortie (V_pv, I_pv), à une valeur précédemment stockée (P old), et basée sur celle-ci fournit ladite adaptation (S4, S104) de la modulation de largeur d'impulsion (PWM_sig, 28) du convertisseur élévateur (14), à appliquer à un commutateur (Q1) du convertisseur élévateur (14) après que le système de commande de charge (3) est revenu en mode veille.

**5.** Système (1) de fenêtre et / ou de couverture architecturale selon l'une quelconque des revendications précédentes, dans lequel ladite unité de batterie rechargeable (11) présente une puissance nominale comprise entre 5 Wh et 50 Wh, telle qu'entre 10 Wh et 35 Wh, telle qu'entre 14 Wh et 26 Wh.

**6.** Système (1) de fenêtre et / ou de couverture architecturale selon l'une quelconque des revendications précédentes, dans lequel le rapport $\left(\dfrac{\text{Texe}}{\text{Tsl}}\right)$ entre la durée pendant laquelle le système de commande de charge (3) est configuré pour être respectivement actif (Texe) et en mode veille (Tsl), est compris entre 0,001 et 0,1 tel qu'entre 0,005 et 0,1, tel qu'entre 0,009 et 0,03.

**7.** Système de fenêtre ou de couverture architecturale selon l'une quelconque des revendications précédentes, dans lequel une interruption de minuterie prédéfinie (TI) est configurée pour fournir ladite activation du système de commande de charge avec ladite fréquence d'activation (f_act) afin d'exécuter la fonction de suivi du point de puissance maximale (MPPT).

**8.** Système de fenêtre ou de couverture architecturale selon l'une quelconque des revendications précédentes, dans lequel le système de commande de charge (3) est configuré pour être activé (Tact) à partir du mode veille pour exécuter la fonction de suivi du point de puissance maximale (MPPT) avec une fréquence d'activation (f_act) entre 0,03 Hz et 500 Hz, tel qu'entre 0,3 Hz et 50 Hz, tel qu'entre 1 Hz et 10 Hz.

**9.** Système de fenêtre ou de couverture architecturale selon l'une quelconque des revendications précédentes, dans lequel l'au moins un panneau d'alimentation photovoltaïque (13a) présente une tension de sortie maximale qui est inférieure à 10V CC, telle qu'inférieure à 8V CC, par exemple inférieure à 6V CC, telle qu'environ 4,2V CC.

**10.** Système de fenêtre ou de couverture architecturale selon l'une quelconque des revendications précédentes, dans lequel l'au moins un panneau d'alimentation photovoltaïque (13a) présente une tension de sortie maximale qui est au moins 1,3 fois inférieure, telle qu'au moins 2 fois inférieure, par exemple au moins 2,5 fois inférieure à la tension de sortie maximale de la batterie rechargeable.

**11.** Système de fenêtre ou de couverture architecturale selon l'une quelconque des revendications précédentes, dans lequel le système de commande de charge (3), en plus d'exécuter ladite fonction de suivi du point de puissance maximale (MPPT), est en outre configuré pour exécuter une ou plusieurs évaluations de mesure de sécurité (TE2, TE102, TE104) avant d'entrer à nouveau dans ledit mode veille, et dans lequel le système de commande de charge (3) est configuré pour commander le signal PWM (28, PWM_sig) du convertisseur élévateur (14), tel qu'en réduisant ou en éteignant le signal PWM commandant le commutateur (Q1) du convertisseur élévateur (14), si un ou plusieurs seuils (Vthr, Tthr) est / sont dépassé(s) selon lesdites une ou plusieurs évaluations de mesure de sécurité.

**12.** Système (1) de fenêtre et / ou de couverture architecturale selon l'une quelconque des revendications précédentes, dans lequel le système de commande de charge (3), avant d'entrer à nouveau dans ledit mode veille, est en outre configuré pour comparer une tension de sortie du convertisseur élévateur (14) avec un seuil de surtension, et régler la modulation de largeur d'impulsion (PWM) d'un commutateur (Q1) du convertisseur élévateur, si la tension de sortie du convertisseur élévateur (14) dépasse le seuil de surtension,
tel que dans lequel ledit réglage, si la tension de sortie du convertisseur élévateur (14) dépasse le seuil de surtension, comprend la réduction du facteur d'utilisation au temps (T_on1 - T_on7) et / ou l'augmentation ou la réduction de la période (TP1-TP7) du facteur d'utilisation, ou la désactivation de la modulation de largeur d'impulsion.

**13.** Système (1) de fenêtre et / ou de couverture architecturale selon l'une quelconque des revendications précédentes, dans lequel le système de commande de charge (3), avant d'entrer à nouveau dans ledit mode veille, est en outre configuré pour fournir une protection contre les surintensités en comparant une valeur de courant de charge à un seuil de surintensité et ajuster la modulation de largeur d'impulsion (PWM), par exemple en réduisant le facteur d'utilisation au temps (T_on1-T_on7) et / ou en augmentant ou en réduisant la période (TP1-TP7) du facteur d'utilisation, en fonction dessus.

**14.** Système de fenêtre ou de couverture architecturale selon l'une quelconque des revendications précédentes, dans lequel l'unité d'entraînement entraînée électriquement (10a), la batterie rechargeable (11) et le système de commande de charge (3) sont placés dans le même dispositif, tel qu'à l'intérieur d'un boîtier commun (20) qui est fixé à ou fait partie du système de fenêtre (4) ou de couverture architecturale (5).

**15.** Système de fenêtre ou de couverture architecturale selon l'une quelconque des revendications précédentes, comprenant en outre un contrôleur d'entraînement (10b) configuré pour commander l'unité d'entraînement entraînée électriquement (10a), tel que dans lequel le contrôleur d'entraînement (10b) est configuré pour lancer automatiquement une opération de l'unité d'entraînement entraînée électriquement (10a) selon un ensemble prédéfini de règles basées sur des informations d'entrée telles qu'une ou plusieurs parmi des informations de capteur de température, des informations de capteur de lumière, des informations de temps, des informations de capteur de force déterminées sur la base d'un ou plusieurs capteurs de force tels qu'une ou plusieurs jauges de contrainte, des informations de capteur de pluie et / ou des informations d'état de la batterie.

**16.** Système de commande électrique alimenté par batterie (50, 50a, 50b) pour faire fonctionner une fenêtre ou une couverture architecturale, dans lequel ledit système de commande (50, 50a, 50b) comprend

au moins un dispositif de consommation d'énergie (10a, 10b) comprenant au moins une unité d'entraînement entraînée électriquement (10a), telle qu'un entraînement par moteur électrique tubulaire ou un entraînement par actionneur à chaîne, pour régler la fenêtre ou la couverture architecturale lorsqu'elle est connectée à celle-ci, et
un système d'alimentation électrique (2) configuré pour alimenter les dispositifs de consommation d'énergie (10a-10d), dans lequel le système d'alimentation (2) comprend :

- une batterie rechargeable (11) configurée pour stocker de l'énergie électrique et fournir de l'énergie électrique audit au moins un dispositif de consommation d'énergie (10a, 10b),

- au moins un panneau d'alimentation photovoltaïque (13a) configuré pour recharger l'unité de batterie rechargeable (11),
- un convertisseur élévateur à modulation de largeur d'impulsion (PWM) (14) configurée pour élever la tension de sortie de l'au moins un panneau d'alimentation photovoltaïque (13a), et
- un système de commande de charge (3) configuré pour commander la recharge de la batterie rechargeable (11),

dans lequel le système de commande de charge (3) comprend :

- une fonction de suivi du point de puissance maximale (MPPT) qui, lorsqu'elle est exécutée, est configurée pour adapter la modulation de largeur d'impulsion (PWM_sig, 28) du convertisseur élévateur (14) sur la base d'un ou plusieurs paramètres de sortie récupérés (V_pv, I_pv) à partir de l'au moins un panneau d'alimentation photovoltaïque (13a), et
- une fonction mode veille configurée pour économiser de l'énergie,

dans lequel le système de commande de charge (3) est configuré pour être activé à partir du mode veille pour exécuter la fonction de suivi du point de puissance maximale (MPPT), dans lequel ladite activation à partir du mode veille est configurée pour être pourvue d'une fréquence d'activation (f_act) inférieure à 500 Hz, telle qu'inférieure à 50 Hz, telle qu'inférieure à 10 Hz, tel que dans lequel le système de commande de charge (3) est configuré pour être alimenté par l'au moins un panneau d'alimentation photovoltaïque (13a).

Fig. 1

Fig. 2

Fig. 3

Fig.4

Fig.5

Fig. 6

Fig. 7

Fig. 8

Fig. 9

Fig. 10

Det. adj. step size ── S111

Add Step to Exist. PWM ── S112

Load new PWM ── S113

Fig. 11

PWM_sig

T_on2    T_on3    T_on4    T_on5

T_on7

T_on6

TP1    TP2    TP3    TP4    TP5  TP6 TP7

T_on1

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3267212 A1
- EP 2597245 A1
- US 2006185799 A1
- US 2009284240 A1